(19) Europäisches Patentamt / European Patent Office / Office européen des brevets

(11) **EP 4 557 212 B1**

(12) **EUROPEAN PATENT SPECIFICATION**

(45) Date of publication and mention
of the grant of the patent:
**15.04.2026 Bulletin 2026/16**

(51) International Patent Classification (IPC):
**G06T 3/4046** (2024.01)   **G06T 3/4053** (2024.01)
**G06T 5/60** (2024.01)

(21) Application number: **24211790.1**

(22) Date of filing: **08.11.2024**

(52) Cooperative Patent Classification (CPC):
**G06T 5/60; G06T 3/4046; G06T 3/4053;**
G06T 2207/20081; G06T 2207/20084

(54) **A MACHINE LEARNING METHOD FOR IMAGE ENHANCEMENT**

MASCHINENLERNVERFAHREN ZUR BILDVERBESSERUNG

PROCÉDÉ D'APPRENTISSAGE AUTOMATIQUE POUR L'AMÉLIORATION D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2023 GR 20230100948**

(43) Date of publication of application:
**21.05.2025 Bulletin 2025/21**

(73) Proprietor: **Samsung Electronics Co., Ltd.**
**Suwon-si, Gyeonggi-do 16677 (KR)**

(72) Inventors:
• **NOROOZI, Mehdi**
**Chertsey, KT16 0RS (GB)**
• **HADJI, Isma**
**Chertsey, KT16 0RS (GB)**
• **TZIMIROPOULOS, Georgios**
**Chertsey, KT16 0RS (GB)**
• **BULAT, Adrian**
**Chertsey, KT16 0RS (GB)**
• **ALONSO, Brais Martinez**
**Chertsey, KT16 0RS (GB)**

(74) Representative: **Appleyard Lees IP LLP**
**G Mill**
**Dean Clough Industrial Park**
**Halifax HX3 5AH (GB)**

(56) References cited:
• **TIM SALIMANS ET AL: "Progressive Distillation for Fast Sampling of Diffusion Models", ARXIV.ORG, CORNELL UNIVERSITY LIBRARY, 201 OLIN LIBRARY CORNELL UNIVERSITY ITHACA, NY 14853, 7 June 2022 (2022-06-07), XP091240948**
• **RAFAEL-EDY MENADIL ET AL: "Learning Using Generated Privileged Information by Text-to-Image Diffusion Models", ARXIV.ORG, CORNELL UNIVERSITY LIBRARY, 201 OLIN LIBRARY CORNELL UNIVERSITY ITHACA, NY 14853, 26 September 2023 (2023-09-26), XP091623955**
• **MENG CHENLIN ET AL: "On Distillation of Guided Diffusion Models", 2023 IEEE/CVF CONFERENCE ON COMPUTER VISION AND PATTERN RECOGNITION (CVPR), IEEE, 17 June 2023 (2023-06-17), pages 14297 - 14306, XP034402431, DOI: 10.1109/CVPR52729.2023.01374**
• **CHITWAN SAHARIA ET AL: "Image Super-Resolution via Iterative Refinement", ARXIV.ORG, 30 June 2021 (2021-06-30), XP081938890**

## Description

### Field

The present application generally relates to a method for performing image enhancement. In particular, the present application provides a method for using diffusion machine learning, ML, models to generate enhanced images.

### Background

Diffusion models are a class of generative machine learning, ML, models which learn a diffusion process that generates a probability distribution of a given dataset. Diffusion models are used to generate new data samples based on the data they have been trained on. For example, a diffusion model that has been trained on an image dataset depicting human faces can generate new images of human faces with various features and expressions, even if those new faces were not present in the original training dataset. Diffusion models have shown impressive performance in various image generation tasks, including image super-resolution and restoring missing areas of an image.

Diffusion models have three main components: a forward process, a reverse process, and a sampling process. During the forward process (also known as forward diffusion, or simply diffusion process), the model applies a sequence of transformations to diffuse samples in a training dataset (having a 'complex' distribution) until a desired simple data points distribution is reached. Each step in the process introduces more simplicity until all that is left is simple noise with original patterns obscured by this noise. An example of this noisy, simple, distribution may be a white noise distribution, or the noise may be distributed in any other way. During the reverse process (also known as reverse diffusion or denoising), the model generates a sample from the simple data points distribution, and then maps it back to a complex distribution by inverting the transformations. The diffusion model uses a conditioning, or prompt, to generate an image using the reverse process. That is, the conditioning is used to guide the denoising process and determine the content of the final image. In this way, diffusion models can generate new data samples by starting from a point in the simple distribution and diffusing it step-by-step to the desired complex data distribution. The whole training process can be thought of as destroying the training dataset samples through the successive addition of Gaussian noise, and learning to recover the data by reversing this noising process (i.e. denoising). Once trained, new samples can be generated by passing randomly sampled noise through the learned denoising process. This is the sampling process (i.e. new sample generation process).

However, a practical bottleneck lies in the heavy sequential computational requirement during the sampling process. Often, diffusion models take 1000 sequential denoising steps to generate one sample, but reducing the number of steps may reduce the quality of the generated samples. There have been several attempts to reduce the required sampling steps. However, reducing the number of steps typically comes with a cost of compromising performance.

Background information can also be found in TIM SALIMANS ET AL: "Progressive Distillation for Fast Sampling of Diffusion Models", ARXIV.ORG, CORNELL UNIVERSITY LIBRARY, 201 OLIN LIBRARY CORNELL UNIVERSITY ITHACA, NY 14853, 7 June 2022 (2022-06-07), which relates to distilling a trained deterministic diffusion sampler, using many steps, into a new diffusion model that takes half as many sampling steps. Further background information can be found in RAFAEL-EDY MENADIL ET AL: "Learning Using Generated Privileged Information by Text-to-Image Diffusion Models", ARXIV.ORG, CORNELL UNIVERSITY LIBRARY, 201 OLIN LIBRARY CORNELL UNIVERSITY ITHACA, NY 14853, 26 September 2023 (2023-09-26), which relates to distilling knowledge from multimodal teachers is distilled into a text-based (unimodal) student. Further background information can be found in MENG CHENLIN ET AL: "On Distillation of Guided Diffusion Models", 2023 IEEE/CVF CONFERENCE ON COMPUTER VISION AND PATTERN RECOGNITION (CVPR), IEEE, 17 June 2023 (2023-06-17), pages 14297-14306, which relates to progressively distilling a pre-trained classifier-free guided model to a diffusion model that requires much fewer sampling steps. Further background information can be found in CHITWAN SAHARIA ET AL: "Image Super-Resolution via Iterative Refinement", ARXIV.ORG, which relates to performing super-resolution through a stochastic iterative denoising process.

The present applicant has therefore identified the need for an improved method of performing an image enhancement task.

### Summary

In a first approach of the present techniques, there is provided a computer-implemented method for training a teacher-student diffusion machine learning, ML, model to perform image enhancement, the method comprising: obtaining a training dataset comprising a plurality of original images; generating, for each original image in the training dataset, at least two degraded images, the at least two degraded images comprising a first degraded image and a second degraded image, where the second degraded image is degraded more than the first degraded image; and for each original image in the training dataset, training the teacher-student diffusion ML model using the original image and the corresponding at least two generated degraded images by: training, using the first degraded image, a teacher diffusion ML model of the teacher-student diffusion ML model to perform a first image enhancement task and generate an enhanced version of the first degraded image, by using, as a training target, the original image; transferring knowledge on how to generate the enhanced version of the first degraded image from the teacher diffusion ML model to a student diffusion ML model of the teacher-student diffusion ML model; and training, using the second degraded image, the student diffusion ML model of the teacher-student diffusion ML model to perform a second image enhancement task and generate an enhanced version of the second degraded image, by using the transferred knowledge and by using the enhanced version of the first degraded image as a training target.

A teacher-student machine learning model is used to perform knowledge distillation, i.e. transferring knowledge from a large model (the teacher model) to a smaller model (the student model). Teacher-student ML models enable knowledge from a large model that has high accuracy and is able to process complex data but is computationally expensive to use, to a smaller model that is more computationally efficient to use but which uses the knowledge obtained from the teacher to achieve similar accuracy.

A diffusion ML model is a type of generative model. A diffusion ML model has three main components: a forward process, a reverse process, and a sampling procedure. The goal of a diffusion ML model is to learn a diffusion process for a given dataset, so that the process can generate new data that are similar to the data in the dataset. Diffusion processes are stochastic process and used to model real-life stochastic systems.

The present techniques relate to training teacher-student diffusion ML models to perform image enhancement (or an image enhancement task). Thus, the ML model comprises a teacher diffusion model and a student diffusion model, and knowledge distillation enables the student diffusion model to perform image enhancement at least as well as the much larger teacher diffusion model.

Advantageously, the first image enhancement task may be an easier, or basic image enhancement task. In contrast, the second image enhancement task may be a harder, or advanced, image enhancement task. This is contrary to the normal way teacher-student models work, in which the teacher model is usually a larger model which has been trained to perform a complex, more advanced task, and the student model is trained to perform a simpler subset of tasks using knowledge distillation, i.e. by "compressing" the teacher's knowledge such that it is relevant to the student's task. The present techniques instead use the teacher-student relationship to incrementally increase the difficulty of a problem, and thus, take a stepwise approach to learning a more and more complex problem.

This approach works particularly well for image enhancement problems where a more degraded (e.g. lower resolution, or with a higher image area being degraded) image is closer to a noisy starting image that is being denoised by the diffusion ML model. In particular, such a more degraded image may be used as a conditioning for the ML model. In diffusion models, a conditioning is the prompt used by the diffusion model to generate a denoised final image.

Thus, the present techniques propose scale distillation. Instead of training a diffusion model that performs a magnification scale of interest using raw data, the present techniques first train a teacher diffusion model that performs smaller magnifications, and then use the teacher model's predictions as a target during the training of the final, or student, model. The rationale behind scale distillation is that the teacher has a simpler task than the student, providing a more detailed supervision signal for the student compared to the raw data. This is especially advantageous when only one denoising step is to be used at inference time, and in particular, the present techniques can be successfully used for image enhancement tasks that only use one denoising step at inference time. This is in contrast to prior art techniques, where a large number of denoising steps, i.e. passes through the denoising part of a diffusion model are needed to generate an output.

The student diffusion machine learning, ML, model may also be referred to herein as simply the student model or the student, and the teacher diffusion machine learning, ML, model may also be referred to herein as the teacher model or teacher.

The training dataset comprises a plurality of images, referred to herein as "original images" to help distinguish from the modified versions of the images. In some places, the original images are also referred to herein as "starting images". The original images may comprise some noise. For example, the original images may be noisy images. Training the teacher and student models may comprise training the teacher and student models using the same noisy starting image on which a diffusion process has been run. This ensures that the diffusion noise "pattern" that is used for both models is the same. Consequently, the student model does not have to relearn a different diffusion noise pattern, because the diffusion process that is used on all images is the same.

The original images may be used as the training targets when training the teacher model. That is, the teacher model may be trained to generate an enhanced version of the first modified image, by using the original image (that was used to generate the first modified image) as the goal or training target. The teacher model is, in other words, trying to enhance the first modified image to get as close to the original image.

As noted above, at least two modified images are generated from each image in the training dataset, where, in the case of two images, the second modified image is modified more than the first modified image. The term "modified" is also used interchangeably herein with the term "degraded". The term "modified" is used to mean that original image is altered in some way. The term "modified more" is used to mean that more alterations or degradations are made to one of the generated modified images than another. For example, the modification may be achieved by adding noise to the image from the dataset, and more noise may be added to generate the second modified image such that it is modified more than the first modified image. It will be understood this is an example to explain what "modified more" means in this context, and is a non-limiting example. The ways that the modifications are performed, and how one modified image is modified more than another, are explained below.

Generally speaking, diffusion models take an input image and gradually add noise to the image over a series of (time) steps. Then the diffusion model is trained to recover the original input image from the noisy image, also over a series of (time) steps. Thus, the teacher diffusion ML model may perform the first image enhancement task over a series of time steps. As a result, transferring knowledge from the teacher diffusion ML model to the student diffusion ML model may comprise transferring knowledge at each time step of the series of time steps during training of the student diffusion ML model. Similarly, the student diffusion ML model may perform the second image enhancement task over a corresponding series of (time) steps. As a result, training the student diffusion ML model to generate an enhanced version of the second degraded image comprises using the transferred knowledge at the corresponding time step of the training of the student diffusion ML model. Thus, the teacher model's knowledge on how to perform the easier image enhancement task is transferred to the student model, which is being trained to perform a relatively harder image enhancement task. In other words, the student model benefits from knowing how the easier image enhancement task is performed. This makes it easier to train the student model to complete the relatively harder image enhancement task, because it has some knowledge already, acquired from the teacher model. In this way, a difficult enhancement task is broken into stages of increasing difficulty, but each stage benefits from the learning of the previous stage. Any suitable knowledge transfer or knowledge distillation process may be used. Generally speaking, knowledge transfer or distillation involves training the student model using an additional loss function (distillation loss)

Generally speaking, generating the at least two degraded images may comprise: generating the first degraded image using a first modification function; and generating the second degraded image using a second modification function, wherein the second modification function applies a larger modification than the first modification function, such that the second degraded image is degraded more than the first degraded image.

In one specific case, training the teacher-student diffusion machine learning, ML, model to perform image enhancement may comprise training the teacher-student diffusion ML model to restore missing or degraded areas of an image. Missing or degraded areas of an image may, for example, be areas of an image for which a pixel value is unknown, i.e. the part of the image is just black/has a zero pixel value. Alternatively, these may be areas of an image where some pixel values have become corrupted by noise, and therefore, some pixel values in the image may have random values. Again, diffusion models are ideal for solving a problem such as this, as they can fill in missing information or replace incorrect information in a contextually appropriate way.

When the image enhancement task is to restore missing or degraded areas of an image, the teacher diffusion ML model may receive an image in which a smaller area, i.e. a smaller number of pixels is missing or degraded, whereas the student diffusion ML model may receive an image in which a larger number of pixels is missing or degraded.

In another specific case, training the teacher-student diffusion machine learning, ML, model to perform image enhancement may comprise training the teacher-student diffusion ML model to perform super-resolution to increases the resolution of an image by a factor N. Super resolution, or super resolution imaging, is used to mean techniques that enhance/increase the resolution of an image, without losing any content or defining characteristics. Thus, the teacher-student diffusion ML model may be trained to perform a super-resolution task, by training the teacher-student diffusion ML model to generate a high-resolution image from a low-resolution image. The teacher diffusion ML model may be trained to perform an easier super-resolution task, and the student diffusion ML model may then be trained to perform a harder super resolution task using the teacher diffusion ML model's prediction. Super resolution is a difficult image enhancement task because the information needed to create the high-resolution image is usually not present in the low-resolution image. Because this is the case, diffusion models which are trained to generate information from a prompt (the conditioning) are ideal to solve this type of task. That is, diffusion models can be used to "make up" the missing information in the low-resolution image in a way that is semantically and contextually correct.

In this case, the method may further comprise: determining a number of stages required to increase the resolution of an image by the factor N. Then, the step of generating at least two degraded images may comprise generating a sufficient number of low resolution images based on the determined number of stages. As noted above, breaking-down the task into stages enables several models to be "chained" together to solve progressively more difficult image enhancement tasks. Because teacher and student models are used in a different sense to, for example, knowledge distillation techniques, in the present application, there can be more than one teacher and one student model. For example, there can be an initial teacher model that is used to train a student model which is in turn used to train a further student model, which is then used to train a yet further student model and so on. Each student model that is used to train a subsequent student model is then the teacher model for the subsequent student model.

In cases where the determined number of stages is one, generating the at least two degraded images may comprise generating two low-resolution images for the one stage, by: generating the first degraded image using a first scale factor or magnification scale; and generating the second degraded image using a second scale factor or magnification scale, wherein the second scale factor/magnification scale is larger than the first scale factor/magnification scale, such that the second degraded image is degraded more than the first degraded image, and the first and second scale factors/magnification scales reduce the resolution of the original image. The scale factor/magnification scale describes the relationship between a resolution of each image in the plurality of images and the corresponding degraded images. In particular, the resolution of each image in the plurality of images can be obtained by multiplying the scale factor/magnification scale by the resolution of each degraded image.

When there is a single stage: training the teacher diffusion ML model may comprise training the teacher diffusion ML model to increase the resolution of the first degraded image, by using a resolution of the original image as the training target; and training the student diffusion ML model may comprise training the student diffusion ML model to increase the resolution of the second degraded image, by using the transferred knowledge and a resolution of the enhanced version of the first degraded image as the training target.

In cases when the determined number of stages is more than one, generating the at least two degraded images may comprise: for a first stage: generating the first degraded image using a first scale factor/magnification scale; generating the second degraded image using a second scale factor/magnification scale, wherein the second scale factor/magnification scale is larger than the first scale factor/magnification scale; and for each further stage: generating a further degraded image using a further scale factor/magnification scale, wherein the further scale factor/magnification scale is larger than each scale factor/magnification scale of the (immediately) previous stage.

When there is more than one stage, for the first stage: training the teacher diffusion ML model comprises training the teacher diffusion ML model to increase the resolution of the first degraded image, by using a resolution of the original image as the training target; and training the student diffusion ML model comprises training the student diffusion ML model to increase the resolution of the second degraded image, by using the transferred knowledge and a resolution of the enhanced version of the first degraded image as the training target. For each further stage, the method may comprise: setting the student diffusion ML model of an immediately previous stage as the teacher diffusion ML model for a current stage. Then: training the student diffusion ML model of the current stage may comprise training the student diffusion ML model to increase the resolution of a further degraded image for the current stage, by using transferred knowledge from the teacher diffusion ML model for the current stage and a resolution of the enhanced version of the first degraded image as the training target.

A less degraded low-resolution image may, for example, be an image with a resolution that is 2, 4, 8, 12 or 16 times less than the resolution of the high-resolution image. A more degraded low-resolution image may, for example, be an image with a resolution that is 4, 8, 12, 16 or 24 times less than the resolution of the high-resolution image. In some cases, the less and more degraded images may be chosen such that the resolution of the less degraded image is twice that of the more degraded image. However, other ratios such as, 4 or 8, between the resolutions of the two degraded images are possible.

Training the teacher and student diffusion ML models may comprise training latent diffusion models comprising an encoder, decoder and a U-net. A U-net is an existing type of convolutional neural network developed for image segmentation. A latent diffusion model does not perform diffusion or denoising processes directly on an image, but instead uses a representation of the image in latent space. This has the advantage that image features are presented in a much more compact format that is easier to handle during training and inference. Therefore, latent diffusion models are able to operate much quicker using less computational resources and are capable of handling much larger image sizes. Additionally, the latent space representation means that salient image features are much more likely to be represented in the latent representation, and the ML model is therefore less likely to be "confused" by less important features/noise in the image. Transformation into the latent space representation of an image is performed by the encoder. To subsequently obtain an image from the latent space representation, a decoder is applied which reverses the encoder's transformation process. Thus, both the student and teacher diffusion models may further comprise a decoder for transforming a latent space representation of an image to an image.

Training the student diffusion-based ML model may further comprise initialising the encoder, decoder and U-net of the student diffusion ML model with weights of the teacher diffusion ML model. This speeds up the student's training process and means that knowledge that has been obtained during training of the teacher can be transferred to the student model. This also means that the teacher and student model architecture may be substantially the same. In some cases, the architectures may differ but both models may still be initialised with similar weights. In some examples, the student and teacher model architectures may differ, and model weights may be transferred and/or transformed in such a way to take account of this.

Training the student diffusion ML model may further comprise training the U-net of the student diffusion ML model while freezing weights of the encoder and decoder model of the student diffusion ML model.

In a second approach of the present techniques, there is provided a computer-implemented method for using a trained machine learning, ML, model to perform image enhancement, the method comprising: receiving a first image that is to be enhanced; inputting the first image into a student diffusion ML model which has been trained according to the methods described herein; and obtaining an enhanced second image from the trained student diffusion ML model. The received first image may have the same type of noise or degradation as present in the images used during training of the diffusion ML model.

Performing image enhancement may comprise performing super-resolution, and obtaining an enhanced second image may comprise obtaining a high-resolution image from a first low-resolution image. A super resolution task is a task by which a low-resolution image is upscaled and enhanced to obtain a high-resolution image from the low-resolution image. This is a difficult image enhancement task because the information needed to create the high-resolution image is usually not present in the low-resolution image. Because this is the case, diffusion models which are trained to generate information from a prompt (the conditioning) are ideal to solve this type of task. That is, diffusion models can be used to "make up" the missing information in the low-resolution image in a way that is semantically and contextually correct.

The image enhancement may comprise restoring missing or degraded areas of an image. Missing or degraded areas of an image may, for example, be areas of an image for which a pixel value is unknown, i.e. the part of the image is just black/has a zero pixel value. Alternatively, these may be areas of an image where some pixel values have become corrupted by noise, and therefore, some pixel values in the image may have random values. Again, diffusion models are ideal for solving a problem such as this, as they can fill in missing information or replace incorrect information in a contextually appropriate way.

In a third approach of the present techniques, there is provided a server for training a teacher-student diffusion machine learning, ML, model to perform image enhancement, the server comprising: storage for storing a training dataset comprising a plurality of original images; and at least one processor coupled to memory for: generating, for each original image in the training dataset, at least two degraded images, the at least two degraded images comprising a first degraded image and a second degraded image, where the second degraded image is degraded more than the first degraded image; and for each original image in the training dataset, training the teacher-student diffusion ML model using the original image and the corresponding at least two generated degraded images by: training, using the first degraded image, a teacher diffusion ML model of the teacher-student diffusion ML model to perform a first image enhancement task and generate an enhanced version of the first degraded image, by using, as a training target, the original image; transferring knowledge on how to generate the enhanced version of the first degraded image from the teacher diffusion ML model to a student diffusion ML model of the teacher-student diffusion ML model; and training, using the second degraded image, the student diffusion ML model of the teacher-student diffusion ML model to perform a second image enhancement task and generate an enhanced version of the second degraded image, by using the transferred knowledge and by using the enhanced version of the first degraded image as a training target.

The features of the first approach apply equally to the third approach and therefore, for the sake of conciseness, are not repeated.

As noted above, the server comprises at least one processor and memory. The memory may store instructions that, when executed by the at least one processor individually or collectively, cause the at least one processor to perform the above-described steps.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figure 1A is a flowchart showing a method for training a teacher-student diffusion machine learning, ML, model to perform an image enhancement task.

Figure 1B is a schematic diagram showing a training pipeline for training a student diffusion machine learning, ML, model;

Figures 2A and 2B are graphs showing FID vs number of DDIM steps with and without scale distillation for different scale factors;

Figure 3 illustrates a sample algorithm that may be used to implement the present techniques;

Figure 4 shows the role of the proposed scale distillation and decoder finetuning on obtained results;

Figure 5 is a table of results comparing the present techniques (YONOS) to existing techniques on the standard DIV2K validation split;

Figure 6A shows a comparison to baselines on synthetic datasets;

Figure 6B shows a comparison to baselines on real datasets;

Figure 6C shows a comparison to baselines on the ImageNet subset with x8 magnification factor; and

Figure 7 is a block diagram of a server for training a student diffusion ML model to perform an image enhancement task.

## Detailed description of the drawings

Broadly speaking, embodiments of the present techniques provide a method for performing image enhancement. In particular, the present application provides a method for using diffusion machine learning, ML, models to perform an image enhancement task, such as image super-resolution, or replacing missing parts of an image. To do so, a teacher diffusion ML model is trained to solve a first image enhancement task, while a student ML model is trained to solve a second image enhancement task using the teacher model's output. In this way, successive diffusion ML model can be trained to perform successively more difficult image enhancement tasks.

The present techniques provide a novel approach that reduces the required number of sampling steps of a diffusion model to as few as possible, while not compromising the performance, i.e. the quality of generated samples. Recently, several approaches have been proposed to reduce the number of sampling steps. However, these approaches usually compromise performance, especially when only a small number of denoising steps are proposed.

Typically, diffusion-based models yield the best results on image patches of similar sizes to those seen during training, such 64x64 pixels. On the other hand, super-resolution (SR) applications require operating in high-resolution settings, drastically exacerbating the computational issues of diffusion-based models. For example, a SR model that aims for a magnification of $\times 4$ going from $256 \times 256$ to $1024 \times 1024$ requires dividing the input image into 16 patches of $64 \times 64$ and running the model on each patch individually, making a large number of steps prohibitive for realistic use cases. Using a state-of-the-art step-reduction strategy, such as more efficient samplers can partially alleviate this issue but still falls widely short of practical needs. For example, going down to the target of 1 DDIM (denoising diffusion implicit model) step results in a catastrophic drop in performance compared to a typical model that does 200 inference steps.

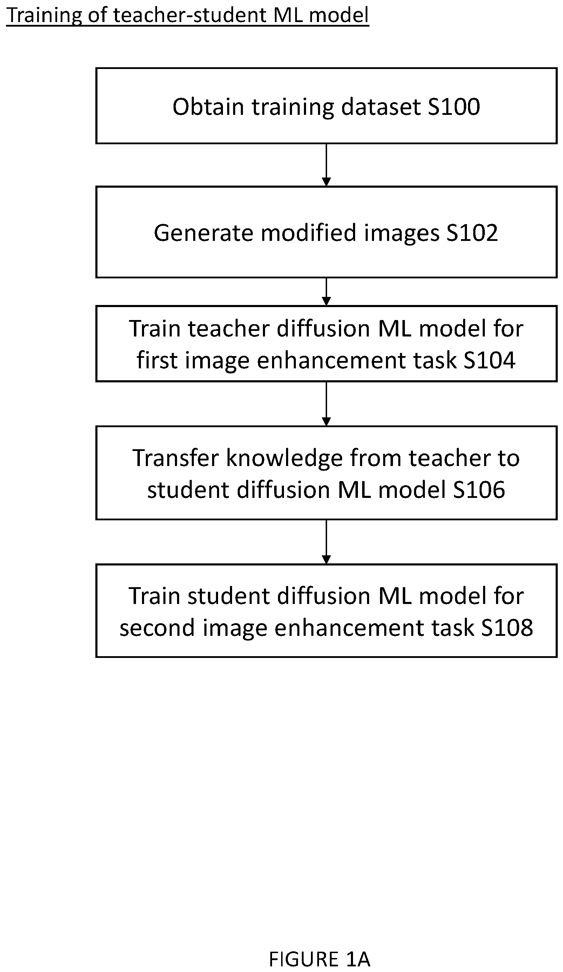

Figure 1A is a flowchart showing a method for training a teacher-student diffusion machine learning, ML, model to perform image enhancement. In particular, the method may be used for training the student diffusion machine learning, ML, model to perform image enhancement, the method comprising: obtaining a training dataset comprising a plurality of original images (step S100); generating, for each original image in the training dataset, at least two modified images, the at least two modified images comprising a first modified image and a second modified image, where the second modified image is modified more than the first modified image (step S102); and for each original image in the training dataset, training the teacher-student diffusion ML model using the original image and the corresponding at least two generated modified images by: training, using the first modified image, a teacher diffusion ML model of the teacher-student diffusion ML model to perform a first image enhancement task and generate an enhanced version of the first modified image, by using, as a training target, the original image (step S104); transferring knowledge on how to generate the enhanced version of the first modified image from the teacher diffusion ML model to a student diffusion ML model of the teacher-student diffusion ML model (step S106); and training, using the second modified image, the student diffusion ML model of the teacher-student diffusion ML model to perform a second image enhancement task and generate an enhanced version of the second modified image, by using the transferred knowledge and by using the enhanced version of the first modified image as a training target (step S108).

Advantageously, the first image enhancement task may be an easier, or basic image enhancement task. In contrast, the second image enhancement task may be a harder, or advanced, image enhancement task. This is contrary to the normal way teacher-student models work, in which the teacher model is usually a larger model which has been trained to perform a complex, more advanced task, and the student model is trained to perform a simpler subset of tasks using knowledge distillation, i.e. by "compressing" the teacher's knowledge such that it is relevant to the student's task. The present techniques instead use the teacher-student relationship to incrementally increase the difficulty of a problem, and thus, take a stepwise approach to learning a more and more complex problem.

This approach works particularly well for image enhancement problems where a more degraded (e.g. lower resolution, or with a higher image area being degraded) image is closer to a noisy starting image that is being denoised by the diffusion ML model. In particular, such a more degraded image may be used as a conditioning for the ML model. In diffusion models, a conditioning is the prompt used by the diffusion model to generate a denoised final image.

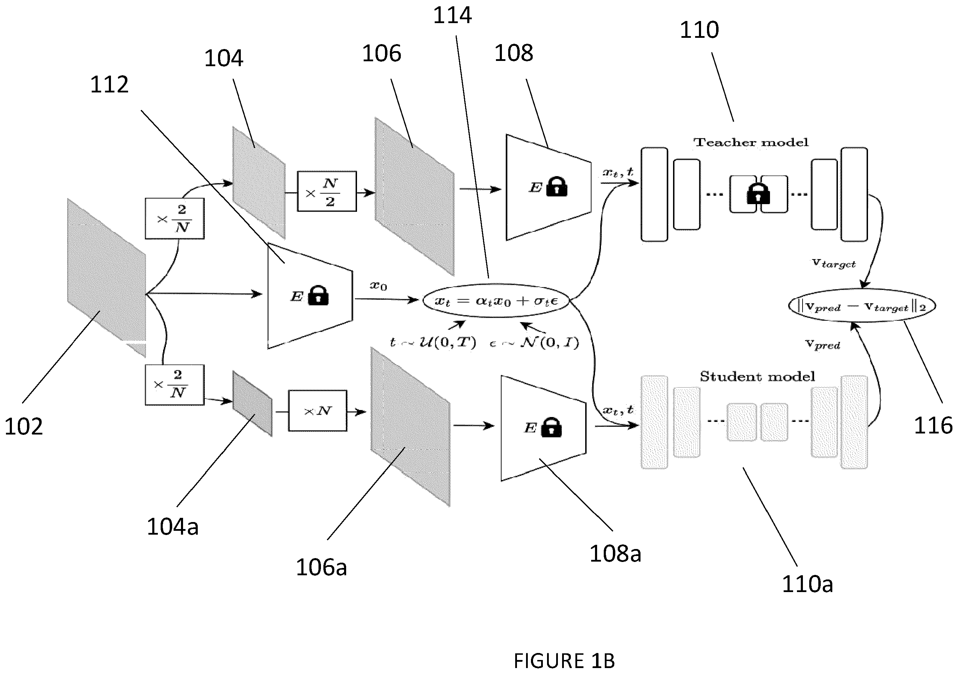

Figure 1B is a schematic diagram showing a training pipeline for training a student diffusion machine learning, ML, model. This pipeline may be used in a method for training the student diffusion machine learning, ML, model to perform an image enhancement task as described above. For each original image in the plurality of images 102 shown in Figure 1, three different image versions may be generated: a first modified image 104, a second modified image 104a, and a noisy image, which is generated by first encoding 112 the original image in the plurality of images, and then running a diffusion process 114 on this image. Both the first and second modified images are, for example rescaled 106, 106a to ensure that both have the same scale. When the modification applied to the image is, for example, a degradation of the image, for example by removing some areas of the image, other normalisation techniques may be applied such that both the first and second modified image have similar properties that allow them to be processed by both the teacher and student diffusion ML models. It will be appreciated that the formatting of images that are passed to the teacher and/or student diffusion ML models may need to have a certain shape, resolution or other property and normalisation may be used to ensure that both the first and second modified image have these properties. This is particularly important when the image enhancement task is, for example, a super resolution task where image resolution may be changed. However, rescaling is also important for other image enhancement tasks because the dimensions of each input image need to be known and the same in order for the diffusion ML models to process the images.

First the teacher model is trained to perform the first image enhancement task. This is done by inputting the rescaled/normalised image 106 into the teacher model's encoder 108 which maps the image data into a latent space representation for easier processing by the teacher diffusion ML model. That is, the image 106 is used as a conditioning for the teacher latent diffusion model 110, with the noisy image that was generated before being used as a starting point for the denoising process performed by a U-net of the teacher model. The U-net is illustrated by the different sized bars in the teacher model.

Next, knowledge is transferred from the teacher to the student diffusion ML model. Advantageously, the student model is initialised using the teacher's weights at this step. This speeds up the student's training process and means that knowledge that has been obtained during training of the teacher can be transferred to the student model. This also means that the teacher and student model architecture need to be substantially the same, although the architectures may also differ and both models may still be initialised with similar weights. In some examples, the student and teacher model architectures may differ, and model weights may be transferred and/or transformed in such a way to take account of this.

In a next step, the student model is trained. To train the student model, the rescaled/normalised image 106a is input into the student diffusion model's encoder 108a before being processed by the student model 110a and a U-net which denoises the image. The student model is trained using the teacher model's prediction 116, i.e. the enhanced version of the first image, as a training target. Again, the noisy starting image 114 is used as a starting point for the student model. By training the teacher and student models in this way, it is possible to train the student model to solve a harder image enhancement task than that performed by the teacher model. That is, the teacher's image enhancement task is easier than the student's image enhancement task. Easier may mean that when, for example, the image enhancement task is image super-resolution, the teacher upscales an image by a smaller scale factor/magnification scale than the student model. When the image enhancement task is, for example, restoring missing or degraded areas of an image, the teacher may be trained to restore an image in which less of the image area is missing or degraded, whereas the student model may be trained to restore an image in which more of the image area is missing or degraded. Image area may mean the number of pixels that are missing or degraded. In this way, the teacher and student models are trained to "work their way up" in terms of difficulty of the image enhancement task.

Figure 1B also illustrates the super-resolution use case. Thus, training the diffusion machine learning, ML, model to perform an overall image enhancement task may comprise training the diffusion ML model to perform an overall super-resolution task, by training the diffusion ML model to generate a high-resolution image from a low-resolution image. That is, the teacher model may be trained to perform an easier super-resolution task, and the student model may then be trained to perform a harder super resolution task using the teacher model's prediction. A super resolution task is a task by which a low-resolution image is upscaled and enhanced to obtain a high-resolution image from the low-resolution image. This is a difficult image enhancement task because the information needed to create the high-resolution image is usually not present in the low-resolution image. Because this is the case, diffusion models which are trained to generate information from a prompt (the conditioning) are ideal to solve this type of task. That is, diffusion models can be used to "make up" or generate the missing information in the low-resolution image in a way that is semantically and contextually correct.

When the overall image enhancement task is a super-resolution task, the first and second modified images may be created using a first and second scale factor respectively, with the second scale factor being larger than the first scale factor. Then, training the teacher diffusion ML model comprises training the teacher diffusion ML model to increase the resolution of the first modified image, by using a resolution of the image corresponding to the first modified image as the training target; and training the student diffusion ML model comprises training the student diffusion ML model to increase the resolution of the second modified image, by using the transferred knowledge and a resolution of the enhanced version of the first modified image as the training target.

Super-resolution means increasing the resolution of an image by a factor N, and thus, when the task is a super-resolution task, the method may also comprise: determining a number of stages required to increase the resolution of an image by the factor N; and generating at least two modified images comprising generating a sufficient number of low resolution images based on the determined number of stages.

When the determined number of stages is more than one, generating the at least two modified images may comprise: for a first stage: generating the at least two modified images may comprise: for a first stage: generating the first modified image using a first scale factor/magnification scale; generating the second modified image using a second scale factor/magnification scale, wherein the second scale factor/magnification scale is larger than the first scale factor/magnification scale; and for each further stage: generating a further modified image using a further scale factor/magnification scale, wherein the further scale factor/magnification scale is larger than each scale factor/magnification scale of the (immediately) previous stage.

For the first stage, training the teacher diffusion ML model comprises training the teacher diffusion ML model to increase the resolution of the first modified image, by using a resolution of the original image as the training target; and training the student diffusion ML model comprises training the student diffusion ML model to increase the resolution of the second modified image, by using the transferred knowledge and a resolution of the enhanced version of the first modified image as the training target. For each further stage, the method may comprise: setting the student diffusion ML model of an immediately previous stage as the teacher diffusion ML model for a current stage. Then: training the student diffusion ML model of the current stage may comprise training the student diffusion ML model to increase the resolution of a further modified image for the current stage, by using transferred knowledge from the teacher diffusion ML model for the current stage and a resolution of the enhanced version of the first modified image as the training target.

That is, the trained student model may itself become a teacher model and may be used to train a further student model by using the student's prediction as the training target for the further student model. It will be appreciated that this process may be continued, i.e. there may be a chain of student models, each of which is trained using predictions made by a previous student model that then becomes the teacher for the next student model in the chain.

In particular, for example, a high-resolution (HR) image of, for example, size $512 \times 512$ is shown in green and labelled 102 in Figure 1B. Two degraded versions 104, 104a of this image may be generated. Each degraded version may be degraded by a different degree, for example, by factors of 2/N, 1/N (sizes $256 \times 256$ and $128 \times 128$) respectively. These degraded images are shown in yellow 104 and red 104a respectively. Both degraded images may be resized back via bicubic upsampling to, for example $512 \times 512$, to generate two rescaled images 106, 106a to be used as input to the encoders of the teacher 108 and student 108a models. Each of the student and teacher encoders 108, 108a may then project the rescaled images 106, 106a to $4 \times 64 \times 64$ tensors. The less and more degraded low resolution (LR) images 106, 106a may be used as input to the teacher 110 and student 110a respectively via concatenation with the noisy version of the high resolution (HR) image, $z_t$ 114. The teacher's output is used as the target for training the student 116. Note that the teacher is first trained independently for a smaller magnification scale and may then be frozen during student training.

One differentiating characteristic of the super-resolution task is that it is conditioned on a low-resolution (LR) input image to yield a target high-resolution (HR) image. Unlike the task of text-to-image generation, which relies on text conditioning, the LR image provides closer content to the target HR image, especially at lower scale factors. Therefore, conditioning the diffusion model on the LR image at low-scale factors makes the task inherently simpler for the diffusion model. The present techniques take advantage of this. While typical diffusion-based SR methods train the model for super-resolution by conditioning directly on the LR image at the target scale factor, the present techniques instead propose a progressive training approach, where training comprises training a model for lower scale factors (where the conditioning signal is closer to the target) and progressively increasing to the target scale factor using the previously trained model as a teacher.

More specifically, instead of using the raw data to train a model for large scale factors, scale distillation obtains a rich and accurate supervisory signal from a teacher trained for a smaller scale factor. Initially, a high-resolution starting image may be first, input into an encoder to obtain a latent space representation of the image, and then, a diffusion process may be run on the encoded image, giving a noisy starting image. To train a diffusion model to perform a super-resolution task, first, a teacher that takes a less degraded image as input is trained and therefore, this teacher model has an easier task to solve during training. The student model is then trained to solve the super-resolution task for a larger scale factor. Training the student diffusion-based ML model may further comprise initialising the encoder, decoder and U-net of the student diffusion ML model with weights of the teacher diffusion ML model. Training the student diffusion ML model may further comprise training the U-net of the student diffusion ML model while freezing weights of the encoder and decoder model of the student diffusion ML model.

For a given time step during the training, both teacher and student are fed with the same noisy version of the HR image. However, the teacher is conditioned with the less degraded LR image (using the same scale that was used during teacher training), while the student is conditioned on the target (more degraded) LR image. The teacher's prediction is used as a target to train the student for the larger scale factor.

This training strategy has two direct advantages: i) Unlike typical training where the supervisory signal is somewhat ambiguous as the target is the same for all noise levels, the present student receives its target from the teacher and is therefore adaptive to the noise level. ii) The target is more accurate, especially in terms of the finer detail, because the teacher takes a less degraded LR image as input.

Optionally, more than one student model may be used for the super-resolution task. That is, the student model that has been trained may itself become a teacher model and may be used to train a further student model by using the student's prediction as the training target for the further student model. It will be appreciated that this process may be continued, i.e. there may be a chain of student models, each of which is trained using predictions made by a previous student model that then becomes the teacher for the next student model in the chain.

Alternatively, training the diffusion machine learning, ML, model to perform an image enhancement task may comprise training the diffusion ML model to restore missing or degraded areas of an image. Missing or degraded areas of an image may, for example, be areas of an image for which a pixel value is unknown, i.e. the part of the image is just black/has a zero pixel value. Alternatively, these may be areas of an image where some pixel values have become corrupted by noise, and therefore, some pixel values in the image may have random values. Again, diffusion models are ideal for solving a problem such as this, as they can fill in missing information or replace incorrect information in a contextually appropriate way.

When the image enhancement task is to restore missing or degraded areas of an image, the teacher model may receive an image in which a smaller area, i.e. a smaller number of pixels is missing or degraded, whereas the student will receive an image in which a larger number of pixels is missing or degraded.

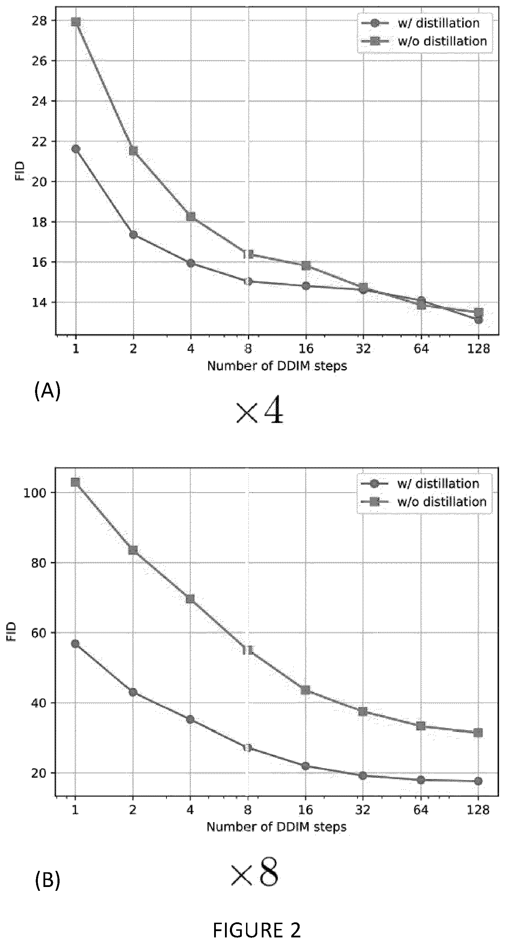

Figures 2A and 2B are graphs showing FID (Fréchet Inception Distance) vs number of DDIM (denoising diffusion implicit model) steps with and without scale distillation for different scale factors. The stable diffusion (SD) approach of the present techniques allows the model to solve the SR task in fewer steps as the task for the student model has been simplified. In fact, it is shown that models trained with the present approach improve significantly when only few steps are used during the inference, such as for example, one step, as is shown in Figures 2A and 2B. In particular, these figures show FID vs. number of DDIM steps on the DIV2K validation set obtained through bicubic degradation. Stable diffusion (SD) is used for upsclaing by factor $\times 4$ in Figure 2A and for upsclaing by $\times 8$ magnification in Figure 2B. In both Figures, the green/dotted curve shows results for upscaling for a model trained with scale distillation and the red/curve with squares shows standard training. The present techniques use $\times 2 \rightarrow \times 4$ scale distillation for $\times 4$ and $\times 2 \rightarrow \times 4 \rightarrow \times 8$ for $\times 8$, and compare with the standard training directly for $\times 4$ and $\times 8$ respectively. All results are obtained using the original SD decoder. The model trained with scale distillation outperforms the standard training with a large margin when using fewer steps for $\times 4$. The gap between scale distillation and the standard training is significantly higher for small $\times 8$ and remains steady for large numbers steps as well.

Therefore, a direct advantage of the proposed approach is that fine-tuning the decoder directly on top of the diffusion model becomes computationally tractable due to the single inference step required. Taking advantage of this fine-tuning, it can be shown that You Only Need One Step (YONOS)-SR outperforms state-of-the-art diffusion-based SR methods that require a large number ( 200) of inference steps.

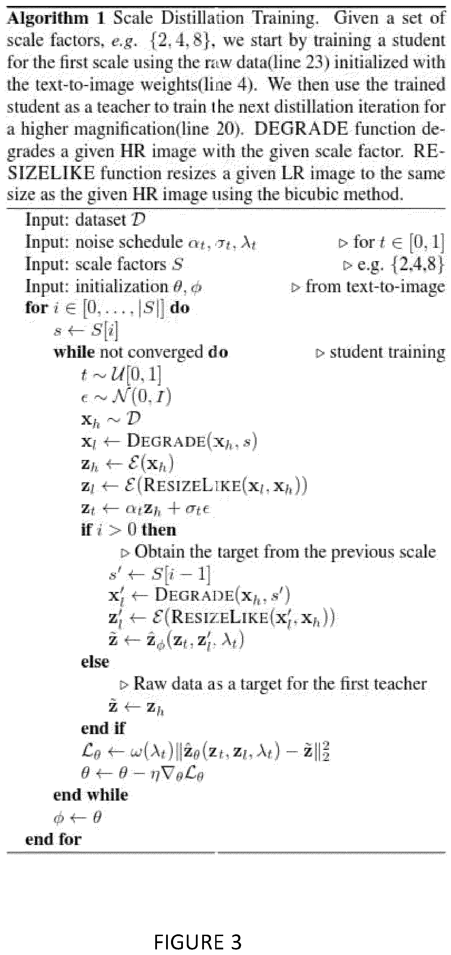

Figure 3 illustrates a sample algorithm that may be used to implement the present techniques. This algorithm illustrates the process when the image enhancement task is a super-resolution task. The steps as shown in Figure 1 and described with reference to Figure 3 are illustrated. Given a set of scale factors, e.g. {2, 4, 8}, the present techniques start by training a student for the first scale using the raw data (line 23) initialized with the text-to-image weights (line 4). The present techniques then use the trained student as a teacher to train the next distillation iteration for a higher magnification (line 20). DEGRADE function degrades a given HR image with the given scale factor. RESIZELIKE function resizes a given LR image to the same size as the given HR image using the bicubic method.

In summary, the contributions of the present techniques are threefold: I) Scale distillation is introduced to train stable diffusion (SD) models with a more accurate and finer supervisory signal for image super-resolution tasks. II) The scale distillation strategy of the present techniques yields more efficient SD models that allow for directly fine-tuning the decoder on top of a frozen one-step diffusion model. III) Combining scale distillation followed by decoder fine-tuning with the U-Net frozen yields state-of-the-art results on the super-resolution task, even at high magnification factors, while requiring only one step.

The present techniques achieve this in a number ways. First, scale distillation is proposed. Instead of training a model that performs a magnification scale of interest using raw data, the present techniques start with training a teacher that performs smaller magnifications and uses its prediction as a target during training the final model. The rationale behind the scale-distillation approach is that the teacher has a simpler task than the student, providing a more detailed supervision signal for the student compared to the raw data.

Diffusion models use a U-net to denoise images. Thus, the U-Net may be frozen and the decoder may be fine-tuned on top of one step DDIM (denoising diffusion implicit model) step of the U-Net. The combination of one step distilled U-Net and fine-tuned decoder outperforms state-of-the-art methods that require 200 steps with a large margin.

The present techniques are referred to herein as "YONOS-SR", a novel stable diffusion-based approach for image super-resolution that archives state-of-the-art results using only a single DDIM step.

**YONOS-SR.** First, an overview of the image super-resolution framework with the latent diffusing model is provided. Then, the proposed scale distillation method is discussed, which enables the performance to be improved with fewer steps sampling, e.g. 1 step. Finally, it is illustrated how the 1-step diffusion model allows for fine-tuning a decoder directly on top of the diffusion model, with a frozen U-Net. It is also shown that fine-tuning a decoder on top of 1 ddim step of the frozen unet improves the performance further, outperforming the standard framework with 200 steps.

Super-resolution with latent diffusion models: Given a training set in the form of a pairs of low and high-resolution images $(\mathbf{x}_h, \mathbf{x}_l) \sim p(\mathbf{x}_h, \mathbf{x}_l)$, the task of image super-resolution involves approximating the probability distribution of $p(\mathbf{x}_h|\mathbf{x}_l)$. The stable diffusion framework uses a probabilistic diffusion model applied on the latent space of a pre-trained and frozen autoendoer. Let us assume that $\mathbf{z}_h = \varepsilon(\mathbf{x}_h)$, $\mathbf{z}_l = \varepsilon(\mathbf{x}_l)$ be the corresponding projection of a given low and high-resolution images $(\mathbf{x}_h, \mathbf{x}_l)$, where $\varepsilon$ is the pre-trained encoder. The forward process of the diffusion model, $q(\mathbf{z}|\mathbf{z}_h)$ is a Markovian gaussina process defined as

$$q(\mathbf{z}_t|\mathbf{z}_h) = \mathcal{N}(\mathbf{z}_t; \alpha_t \mathbf{z}_h, \sigma_t \mathbf{I}), \mathbf{z} = \{\mathbf{z}_t | t \in [0,1]\} \tag{1}$$

where $\mathbf{z}$ denotes the latent variable of the diffusion model and $\alpha_t$, $\sigma_t$ define the noise schedule such that the log signal-to-noise ratio, $\lambda_t = \log[\alpha_t^2/\sigma_t^2]$, decreases with $t$ monotonically. During training, the model learns to reverse this diffusion process progressively, estimate $p(\mathbf{z}_{t-1}|\mathbf{z}_t)$, to generate new data starting from noise.

The super-resolution objective function is derived by maximizing a variational lower bound of the data log-likelihood of $p(\mathbf{z}_h|\mathbf{z}_l)$ via approximating the backward denoising process of $p(\mathbf{z}_h|\mathbf{z}_t, \mathbf{z}_l)$. Note the denoising process is conditioned on the low-resolution input, $\mathbf{z}_l$, as well. This can be estimated by the function $\hat{\mathbf{z}}_\theta(\mathbf{z}_t, \mathbf{z}_l, \lambda_t)$ parametrized by a neural netowork. This function can be trained further via a weighted mean square error loss.

$$argmin_\theta \, \mathbb{E}_{\epsilon,t}[\omega(\lambda_t)||\hat{\mathbf{z}}_\theta(\mathbf{z}_t, \mathbf{z}_l, \lambda_t) - \mathbf{z}_h||_2^2] \tag{2}$$

over uniformly sampled times $t \in [0,1]$ and $\mathbf{z}_t = \alpha_t \mathbf{z}_h + \sigma_t \epsilon$, $\varepsilon \sim \mathcal{N}(0,I)$. There are several choices of weighting function $\omega(\lambda_t)$. The present techniques use ($1 + \frac{\alpha_t^2}{\sigma_t^2}$), which is known as the **v** pasteurization, as described in "Progressive distillation for fast sampling of diffusion models" by Tim Salimans and Jonathan Ho in International Conference on Learning Representations, 2022.

The inference process from a trained model involves a series of sequential calls, steps, of $\hat{\mathbf{z}}_\theta$, starting from $\mathbf{z}_1 \sim \mathcal{N}(0, I)$, where the quality of the generated image improves monotonically with the number of steps and quantitative results shown in Figures 2A and 2B. Several methods have been proposed to reduce the number of required steps at inference time. The present techniques use the widely used DDIM sampler, as described in "Denoising diffusion implicit models" by Jiaming Song, Chenlin Meng, and Stefano Ermon. in International Conference on Learning Representations, 2021. When simply reducing the number of DDIM steps, it is clear that the performance drops drastically with an extremely low number of steps, such as a number of steps on the order of 1. In the following, scale distillation is introduced to alleviate this shortcoming.

**Scale distillation.** The complexity of the image super-resolution task increases with the scale factor (SF). For example, a model trained for a lower SF ($\times 2$) takes as input a less degraded image compared to a larger SF ($\times 4$). Therefore, a diffusion model trained for $\times 2$ magnification should require fewer inference steps to solve the HR image generation task compared to a model trained for the x4 scale factor.

To alleviate the training complexity for larger scale factors, the present techniques build on this observation and propose a progressive scale distillation training strategy. In particular, the present techniques start by training a teacher for a lower SF that takes a less degraded image as input. The present techniques then use its prediction as a target to train the model for a higher factor as a student.

Let $N$ be the target SF of interest. Standard training involves making pairs of low and high-resolution images, where the low-resolution image is smaller than the HR image by a factor of $1/N$. The common approach for generating the training pairs is to gather a set of high-resolution images, perform synthetic degradation to obtain the corresponding low-resolution image and train a model that directly performs $\times N$ magnification using eq. 2. Instead, the present techniques start with training a standard diffusion-based teacher that performs a lower SF, which takes a less degraded LR image, 2/*N,* as input and use its prediction to train the student.

More precisely, Let us assume $\hat{\mathbf{z}}_\phi$, $\hat{\mathbf{z}}_\theta$ be the teacher and student denoising models parameterized by $\phi$, $\theta$ respectively. To train the student for a factor of *N,* two degraded images are generated for a given high-resolution image with factors 1/*N,* 2/*N,* with latent representations denoted by $\mathbf{z}_l$, $\mathbf{z}_{l'}$ respectively. That means $\mathbf{z}_{l'}$ is less degraded compared to $\mathbf{z}_l$. Similar to the standard diffusion model training, random noise is sampled at t and added to the high-resolution image to obtain $\mathbf{z}_t$. The scale distillation loss will be:

$$argmin_\theta \; \mathbb{E}_{\epsilon,t}[\omega(\lambda_t)||\hat{\mathbf{z}}_\theta(\mathbf{z}_t, \mathbf{z}_l, \lambda_t) - \hat{\mathbf{z}}_\phi(\mathbf{z}_t, \mathbf{z}_{l'}, \lambda_t)||_2^2] \quad (3)$$

where the teacher is trained for N/2 magnification and frozen, and the student is initialized with the teacher's weights before the training. Note that the present techniques use the latent diffusion framework that allows exactly the same architecture and input shapes for both the teacher and the student. Although the input low-resolution images for the student and teacher are of different sizes, they are both resized to a fixed size and fed to the encoder, which projects them to a tensor with a fixed size of 4 × 64 × 64. This process has been illustrated and described with reference to Figure 1 above in detail

The idea of scale distillation is in line with that of progressive temporal distillation. While a standard denoising model would only use the final image as the target irrespective of the sampled time step t (see Eq. 2), both scale and progressive temporal distillation rely on the teacher to provide a supervisory signal specific for step t (see Eq. 3). In this way, the supervisory signal is attuned to the specific denoising step, providing stable and consistent supervision at every denoising step. Figures 2A and 2B provide empirical support for the present hypothesis. A significant gap between the distilled model is observed from × 2 to × 4 compared to the model that is directly trained for × 4 when evaluated with few inference steps. The gap shrinks as the number of steps increases and the quality starts saturating.

Similar to the temporal progressive distillation, as described in Salimans et al., the proposed scale distillation process can be applied iteratively with higher scale factors at each training step. The first student is initialized from scratch and trained on the raw data, similar to the standard training. Consequently, this student becomes the new teacher for training the next scale factor. Three distillation steps are considered up to the scale factor of × 8 starting from × 2, × 2 → × 4 → × 8. As it is shown in Figures 2A and 2B, scale distillation is significantly more effective for × 8 magnification where the LR image is of lower quality.

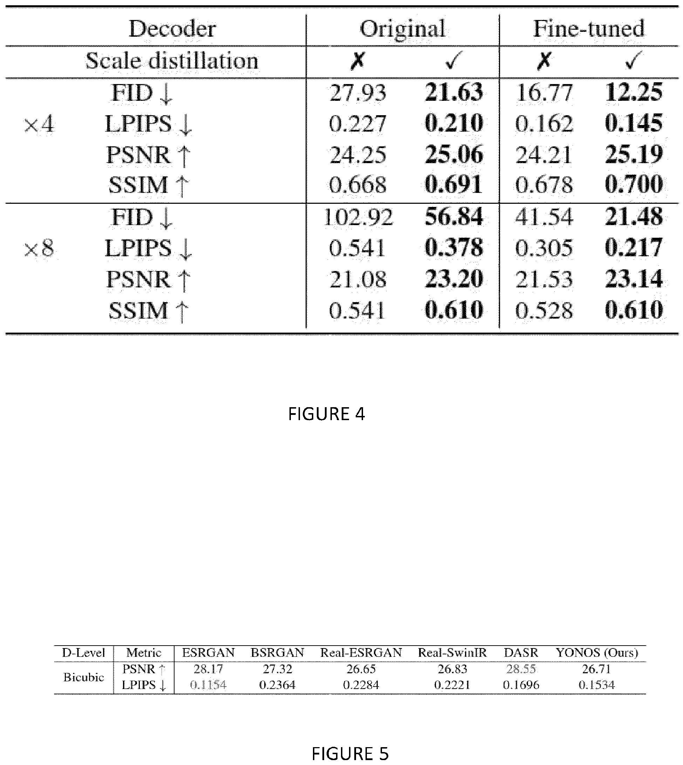

**Decoder fine-tuning.** While scale distillation improves the one-step inference noticeably, there is still a gap between the one-step model and the saturated performance with a larger number of steps, see Figures 2A and 2B. To fill this gap, the present techniques propose to fine-tune the decoder on top of the frozen one-step diffusion model resulting from scale distillation. Figure 4 shows the role of the proposed scale distillation and decoder finetuning on obtained results. All results shown in Figure 4 are obtained with 1 inference step. That is, after training the diffusion model, the U-Net is frozen, one DDIM step is applied for a given LR image, and used as input to fine-tune the decoder for the SR task. The original loss is used that has been used for training the autoencoder, as described in "High-resolution image synthesis with latent diffusion models" by Rombach et al. in IEEE Conference on Computer Vision and Pattern Recognition, 2022. Importantly, this fine-tuning strategy with the U-Net in place is only possible with a diffusion model that can work properly with one step as enabled by the present scale distillation approach, as shown in Figure 4. It is empirically shown that the combination of the present scale distillation approach with decoder fine-tuning yields a one-step model that can readily compete with models requiring a large number of inference steps.

Figure 5 is a table of results comparing the present techniques (YONOS) to existing techniques on the standard DIV2K validation split.

**Experiments.** YONOS-SR is evaluated against other methods targeting real image super-resolution at the standard × 4 scale factor and demonstrate that the proposed scale distillation approach generalizes to higher scale factors of × 8. Qualitative results are provided for × 4 and × 8. Ablation studies are performed to highlight the role of the present main contributions. Finally, it is shown that the proposed scale distillation method could be used for trainig smaller diffusion models.

**Evaluation on real image super resolution.** First the performance of the proposed YONOS-SR model is evaluated in the standard real image super-resolution setting targeting × 4 scale factor.

Following previous work, DIV2K is used and a subset of 10K images from the FFHQ training set, as described in "A style-based generator architecture for generative adversarial networks" by Karras et al. in IEEE Conference on Computer Vision and Pattern Recognition, 2019, to train the present model. The Real-ESRGAN degradation pipeline (as described in "Real-ESRGAN: Training real-world blind super-resolution with pure synthetic data" by Xintao Wang, Liangbin Xie, Chao Dong, and Ying Shan in IEEE International Conference on Computer Vision - Workshops, 2021 b) is adopted to generate synthetic LR-HR pairs.

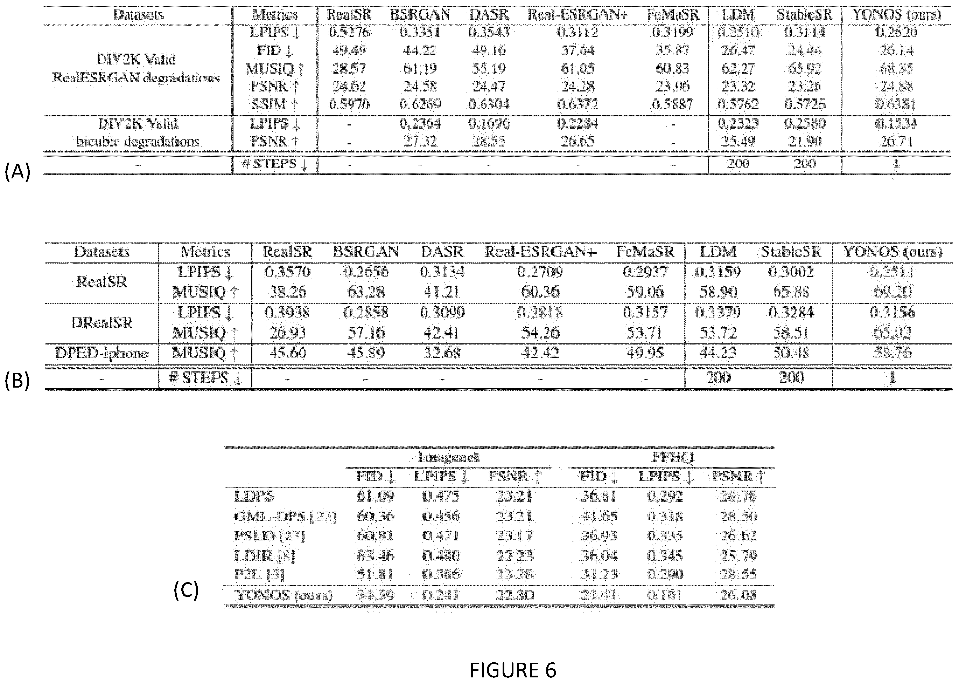

The present model is evaluated on both synthetic and real datasets. Figure 6A shows a comparison to baselines on synthetic datasets. Results highlighted in Red and Blue correspond to best and second best results, respectively. Cells with - indicate that there were no previously reported results using the considered baseline and the corresponding Similar to what is described in "Exploiting diffusion prior for real-world image super-resolution" by Wang et al. in arXiv preprint arXiv:2305.07015, 2023, 3K LR-HR (128 → 512) pairs synthesized from the DIV2K validation set using the Real-ESRGAN degradation pipeline are used as the synthetic dataset. Results are also reported for the standard DIV2K validation split with bicubic degradations for completeness.

Figure 6B shows a comparison to baselines on real datasets. Results highlighted in Red and Blue correspond to best and second best results, respectively. For the real dataset, 128 × 128 centre crops are used from the RealSR (Xiaozhong Ji, Yun Cao, Ying Tai, Chengjie Wang, Jilin Li, and Feiyue Huang. Real-world super-resolution via kernel estimation and noise injection. In IEEE Conference on Computer Vision and Pattern Recognition - Workshops, 2020.), DRealSR (Pengxu Wei, Ziwei Xie, Hannan Lu, ZongYuan Zhan, Qixiang Ye, Wangmeng Zuo, and Liang Lin. Component divide-and-conquer for real-world image super-resolution. In European Conference on Computer Vision, 2020.) and DPED-iphone (Andrey Ignatov, Nikolay Kobyshev, Radu Timofte, Kenneth Vanhoey, and Luc Van Gool. Dslr-quality photos on mobile devices with deep convolutional networks. In IEEE International Conference on Computer Vision, 2017.) datasets.

**Evaluation metrics.** Evaluation is performed using various perceptual and image quality metrics, including LPIPS (Zhang et al., "The unreasonable effectiveness of deep features as a perceptual metric". In IEEE Conference on Computer Vision and Pattern Recognition, 2018.), FID (Heusel et al. "Gans trained by a two time-scale update rule converge to a local nash equilibrium". In Advances on Neural Information Processing Systems, 2017.) (where applicable), as well as the no-reference image quality metric, MUSIQ (Ke et al., "Musiq: Multiscale image quality transformer". In IEEE International Conference on Computer Vision, 2021.). For the synthetic datasets, PSNR and SSIM are also reported, for reference.

**Baselines.** As the present techniques aim to improve the inference process of diffusion-based super-resolution, the present main points of comparison are diffusion-based SR models, including the recent StableSR model (Wang et al., In arXiv preprint arXiv:2305.07015, 2023.) and the original LDM model (Rombach et al., "High-resolution image synthesis with latent diffusion models". In IEEE Conference on Computer Vision and Pattern Recognition, 2022.).

For completeness, comparison to other non-diffusion-based baselines are also included, including: RealSR (Ji et al.), BSRGAN (Zhang et al., "Designing a practical degradation model for deep blind image super-resolution". In IEEE International Conference on Computer Vision, 2021.), RealESRGAN (Wang et al., "Real-ESRGAN: Training real-world blind super-resolution with pure synthetic data". In IEEE International Conference on Computer Vision - Workshops, 2021 b), DASR (Liang et al. "Efficient and degradation-adaptive network for real-world image super-resolution". In European Conference on Computer Vision, 2022.) and FeMaSR (Chen et al. "Real-world blind super-resolution via feature matching with implicit high-resolution priors". In ACM International Conference on Multimedia, 2022.).

**Results.** Results summarized in Figures 6A and 6B show that YONOS-SR outperforms all other diffusion-based SR methods, while using only one inference step, whereas other alternatives use 200 inference steps. These results highlight the efficiency of YONOS-SR in reducing the number of steps to one without compromising performance but indeed improving it further. Also, the present model outperforms all considered baselines in 5 out of 7 metrics on the synthetic data and 4 out of 5 metrics on the real datasets.

**Generalization to higher scale factors.** Figure 6C shows a comparison to baselines on the ImageNet subset with x8 magnification factor. Results highlighted in Red and Blue correspond to the best and second best results, respectively. The results for other methods are taken from: Chung et al. "Prompt-tuning latent diffusion models for inverse problems". In arXiv preprint arXiv: 2310.01110, 2023. It is possible to evaluate the generalization capability of the proposed scale distillation approach. To this end, the YONOS-SR model is trained with one more iteration of scale distillation, thereby going from a model capable of handling $\times 4$ magnifications to $\times 8$ magnifications. The decoder is then fine-tuned on top of the one-step $\times 8$ diffusion model. To evaluate this model, following recent work the evaluation is on the same subset of ImageNet and FFHQ for $\times 8$ magnification, $64 \times 64 \rightarrow 512 \times 512$. In particular, the same 1k subset of ImageNet test set is selected by first ordering the 10k images by name and then selecting the 1k subset via interleaved sampling, using images of index 0, 10, 20, etc. To obtain the LR-HR pairs, $\times 8$ average pooling degradations are used. In the case of FFHQ, the first 1k images of the validation set are used. Evaluation uses the same metrics and baselines reported in this recent work (Chung et al. "Prompt-tuning latent diffusion models for inverse problems". In arXiv preprint arXiv: 2310.01110, 2023).

The results summarized in Figure 6C demonstrate that the present proposed one-step method generalizes well to higher scale factors, where it is able to achieve good results in terms of FID and LPIPS scores, which are known to better align with human observation, especially at higher magnification factors [Sahak et al. (2023)]. Notably, unlike baselines, the present model has not been trained on ImageNet data. Only 10k images of FFHQ are used in the present training set.

**Qualitative evaluation.** In addition to extensive quantitative evaluations, a qualitative comparison between one-step YONOS-SR and 200-step StableSR and standard diffusion-based SR (SD-SR) is performed. The present method generates the closest SR images to the ground truth in terms of detailed textures while taking only 1-step during the inference. These observations are in line with the numerical superiority of the present method in the quantitative evaluations above. Two iterations of scale distillation $\times 2 \rightarrow \times 4$ are performed, and the decoder is fine-tuned on top of the 1 step model.

Scale distillation is significantly more effective for $\times 8$ compared to $\times 4$ magnification. As a qualitative support, the model trained directly for $\times 8$ magnification without scale distillation is compared with three iterations of scale distillation $\times 2 \rightarrow \times 4 \rightarrow \times 8$. Again, the validation set of DIV2K dataset is used. Following the numerical analyses in Figures 2A and 2B, it is observed that the model trained with scale distillation outperforms the standard training in terms of recovering the corresponding content and details. Note that the problem of $\times 8$ magnification is of significantly higher complexity compared to $\times 4$ due to poor LR input. Similar to Figures 2A and 2B, the original decoder is used.

**Ablation study.** The effect of the various components introduced in the present approach is studied, including comparing FID vs number of inference steps for various models (i.e. with and without distillation); and compare FID after each stage of the present training ending with decoder finetuning. To this end, the standard DIV2K validation set is used with $\times 4$ low-resolution images obtained through bicubic degradation, as described in "Ntire 2017 challenge on single image super-resolution: Dataset and study" by Eirikur Agustsson and Radu Timofte in IEEE Conference on Computer Vision and Pattern Recognition - Workshops, 2017. The FID metric is used, as it is a standard metric for assessing the quality of generative models. The present initial evaluation also revealed that the FID metric correlates the most with the human evaluation of the generated images. The validation set of the DIV2K dataset includes only 100 samples. To obtain more reliable FID scores, 30 random $128 \times 128$ patches and their corresponding $512 \times 512$ high-res counterparts are extracted from each image in the standard DIV2K bicubic validation set, resulting in a total of 3k LR-HR pairs. For completeness, LPIPS, PSNR, and SSIM scores are also reported.

**Impact of scale distillation.** The process begins by evaluating the impact of the present proposed scale distillation on speeding up inference time. To this end, two stable diffusions (SD) models trained for $\times 4$ super-resolution (SR) are run, with various numbers of inference steps. The first model is a standard SD super-resolution model trained directly for target $\times 4$ super-resolution ( SD-SR), while the second model is trained with the proposed scale distillation from $\times 2$ magnification to $\times 4$. The same model, training set, and degradation pipeline is used in training both models. The only difference is the use of the present scale distillation in the later model. Specifically, the process starts with training a teacher for $\times 2$ magnification using raw data as a denoising target. The $\times 2$ model is used as a frozen teacher and its prediction is used to train a student for $\times 4$ magnification. The results summarized in Figures 2A and 2B speak decisively in favour of the present scale distillation approach. It can be seen that for $\times 4$ magnification, the model trained without scale distillation needs at least twice the number of inference steps that the model with scale distillation needs to reach a similar performance when the number of steps is smaller than 16. Notably, it can be seen that the present scale distillation model is performing especially well with as little as one inference step, where it outperforms the non-scale distilled baseline by at least 6 points.

Scale distillation outperforms the standard training more significantly for $\times 8$ magnification where three training iterations are performed for scale distillation, $\times 2 \rightarrow \times 4 \rightarrow \times 8$. One reason for the larger gap for $\times 8$ magnification could be that the SR task is more ambiguous for $\times 8$ magnification due to lower quality input. As a result, the model benefits more from the more simplified supervisory signal obtained from scale distillation. Note that the original SD decoder model is used here only to analyze the impact of the scale distillation independently of decoder fine-tuning.

**Impact of decoder fine-tuning.** One of the direct consequences of having a diffusion model that can yield good results in one denoising step is that it allows for decoder fine-tuning with the U-Net in place, as it will directly give a good starting point to the decoder. To validate the importance of the input given to the decoder prior to fine-tuning and, thereby, the importance of YONOS-SR, the standard SD-SR model and the present scale distillation model are experimented with. In both cases, the U-Net is frozen and the models are only allowed to do 1 denoising step. Their output is then fed to the decoder and the decoder is then fine-tuned following the same loss used in the original stable diffusion model.

The results summarized in Figure 4 validate the importance of having a good initial input from the diffusion model prior to decoder fine-tuning. It can be seen in the left chunk of Figure 4, the model trained with scale distillation outperforms the standard training with a good margin when using the original decoder, indicating that the scale distillation results in a U-Net that provides a higher quality input for the decoder. Moreover, it can be seen in the right chunk of Figure 4, fine-tuning the decoder on top of both 1-step models improves the performance. However, the model with scale distillation yields significantly better results than the standard SD-SR directly trained for the target magnification. The impact of scale distillation is more sensible for $\times 8$ magnification than $\times 4$, where FID improves from 41.54 to 21.48. Importantly, this fine-tuning strategy is not computationally feasible with diffusion models that require many denoising steps to give a reasonable starting point for the decoder.

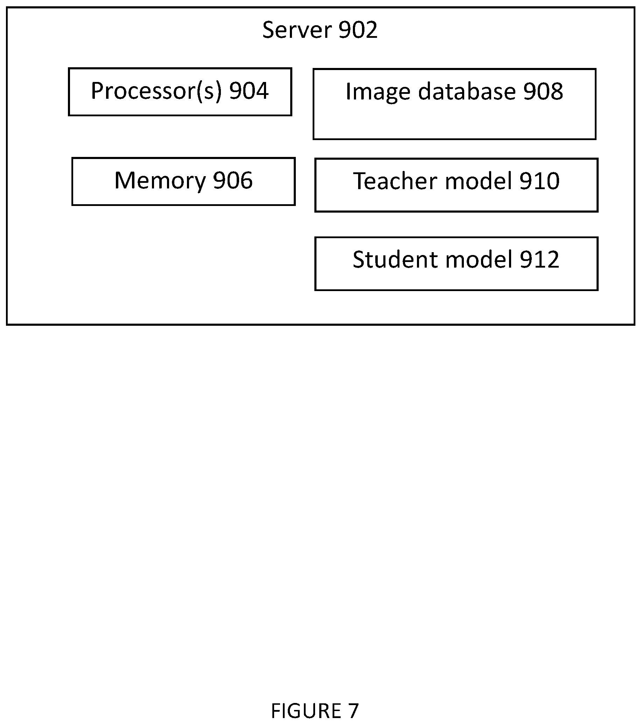

Figure 7 is a block diagram of a server for training a student diffusion ML model to perform image enhancement. The server 902 comprises at least one processor 904 coupled to memory 906, a databaes of images 908, a teacher diffusion ML model 910, and a student diffusion ML model 912. The database 908 comprises a set of ground truth images, and corresponding sets of images for training at least one teacher 910 and at least one student 912diffusion ML model. The images for training the teacher 910 diffusion ML model are less degraded images than those for training the student 912 diffusion ML model. The processor 904 is arranged for: training the teacher diffusion ML model to perform a first image enhancement subtask, wherein the teacher model is trained to output a prediction for the image enhancement task using the ground truth images as a training target and corresponding images for training the teacher diffusion ML model; training the student diffusion ML model to perform a second image enhancement subtask, wherein the student model is trained to output a further prediction for the image enhancement task by using the teacher model's prediction as a training target and corresponding images for training the student diffusion ML model.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1.    A computer-implemented method for training a teacher-student diffusion machine learning, ML, model to perform image enhancement, the method comprising:

obtaining a training dataset comprising a plurality of original images;
generating, for each original image in the training dataset, at least two degraded images, the at least two degraded images comprising a first degraded image (104) and a second degraded image (104a), where the second degraded image (104a) is degraded more than the first degraded image (104); and
for each original image in the training dataset, training the teacher-student diffusion ML model using the original image and the corresponding at least two generated degraded images by:

training, using the first degraded image (104), a teacher diffusion ML model 110 of the teacher-student diffusion ML model to perform a first image enhancement task and generate an enhanced version of the first degraded image, by using, as a training target, the original image;
transferring knowledge on how to generate the enhanced version of the first degraded image from the teacher diffusion ML model (110) to a student diffusion ML model (110a) of the teacher-student diffusion ML model; and
training, using the second degraded image (104a), the student diffusion ML model (110a) of the teacher-student diffusion ML model to perform a second image enhancement task and generate an enhanced version of the second degraded image, by using the transferred knowledge and by using the enhanced version of the first degraded image as a training target.

2.    The method as claimed in claim 1, wherein:

the teacher diffusion ML model (110) performs the first image enhancement task over a series of time steps, and transferring knowledge from the teacher diffusion ML model (110) to the student diffusion ML model (110a) comprises transferring knowledge at each time step of the series of time steps during the training of the student diffusion ML model (110a); and
the student diffusion ML model (110a) performs the second image enhancement task over a corresponding series of time steps, and training the student diffusion ML model (110a) to generate an enhanced version of the second degraded image comprises using the transferred knowledge at the corresponding time step of the training of the student diffusion ML model (110a).

3.    The method as claimed in claim 1 or 2 wherein generating the at least two degraded images comprises:

generating the first degraded image (104) using a first modification function; and
generating the second degraded image (104a) using a second modification function,
wherein the second modification function applies a larger modification than the first modification function such that the second degraded image (104a) is degraded more than the first degraded image (104).

4.    The method as claimed in any of claims 1, 2 or 3 wherein training the teacher-student diffusion machine learning, ML, model to perform image enhancement comprises training the teacher-student diffusion ML model to restore missing or degraded areas of an image.

5.    The method as claimed in claim 1, 2 or 3 wherein training the teacher-student diffusion machine learning, ML, model to perform image enhancement comprises training the teacher-student diffusion ML model to perform super-resolution to increase the resolution of an image by a factor N, and wherein the method further comprises:

determining a number of stages required to increase the resolution of an image by the factor N; and
the generating of at least two degraded images comprises generating a number of low resolution images based on the determined number of stages.

6. The method as claimed in claim 5 wherein, when the determined number of stages is one, generating the at least two degraded images comprises generating two low-resolution images for the one stage, by:

generating the first degraded image (104) using a first magnification scale; and
generating the second degraded image (104a) using a second magnification scale,
wherein the second magnification scale is larger than the first magnification scale such that the second degraded image (104a) is degraded more than the first degraded image (104), and the first and second magnification scales reduce the resolution of the original image.

7. The method as claimed in claim 6 wherein:

training the teacher diffusion ML model (110) comprises training the teacher diffusion ML model (110) to increase the resolution of the first degraded image (104), by using a resolution of the original image as the training target; and
training the student diffusion ML model (110a) comprises training the student diffusion ML model (110a) to increase the resolution of the second degraded image (104a), by using the transferred knowledge and a resolution of the enhanced version of the first degraded image as the training target.

8. The method as claimed in claim 5 wherein, when the determined number of stages is more than one, generating the at least two degraded images comprises:

for a first stage:

generating the first degraded image (104) using a first magnification scale;
generating the second degraded image (104a) using a second magnification scale, wherein the second magnification scale is larger than the first magnification scale such that the second degraded image (104a) is degraded more than the first degraded image (104), and the first and second magnification scales reduce the resolution of the original image; and

for each further stage:
generating a further degraded image using a further magnification scale, wherein the further magnification scale is larger than each magnification scale of the previous stage such that each further degraded image is degraded more than a previous degraded image, and the magnification scales reduce the resolution of the original image.

9. The method as claimed in claim 8 wherein:

for the first stage:

training the teacher diffusion ML model (110) comprises training the teacher diffusion ML model (110) to increase the resolution of the first degraded image (104), by using a resolution of the original image as the training target; and
training the student diffusion ML model (110a) comprises training the student diffusion ML model (110a) to increase the resolution of the second degraded image (104a), by using the transferred knowledge and a resolution of the enhanced version of the first degraded image as the training target; and

for each further stage:

setting the student diffusion ML model (110a) of an immediately previous stage as the teacher diffusion ML model for a current stage; and
training the student diffusion ML model (110a) of the current stage comprises training the student diffusion ML model (110a) to increase the resolution of a further degraded image for the current stage, by using transferred knowledge from the teacher diffusion ML model for the current stage and a resolution of the enhanced version of the first degraded image as the training target.

10. The method as claimed in any preceding claim wherein training the teacher and student diffusion ML models comprises training latent diffusion models comprising an encoder, decoder and a U-net.

11. The method as claimed in claim 10 wherein training the student diffusion ML model (110a) further comprises initialising the encoder (108a), decoder and U-net of the student diffusion ML model (110a) with weights of the teacher diffusion ML model (110).

12. The method as claimed in claim 10 or 11 wherein training the student diffusion ML model (110a) further comprises training the U-net of the student diffusion ML model (110a) while freezing weights of the encoder (108a) and decoder of the student diffusion ML model (110a).

13. A computer-implemented method for using a trained machine learning, ML, model to perform image enhancement, the method comprising:

receiving a first image that is to be enhanced;
inputting the first image into a student diffusion ML model (110a) which has been trained according to the method of any one of claims 1 to 12; and
obtaining an enhanced second image from the trained student diffusion ML model (110a).

14. The method as claimed in claim 13 wherein performing image enhancement comprises performing super-resolution, and wherein:

receiving the first image comprises receiving a low resolution image; and
obtaining an enhanced second image comprises obtaining a super-resolution version of the low resolution image.

15. The method as claimed in claim 13 wherein the image enhancement is restoring missing or degraded areas of the first image.


**Patentansprüche**

1. Computerimplementiertes Verfahren zum Trainieren eines Lehrer-Schüler-Diffusions-Maschinenlern-, ML-, Modells zur Durchführung einer Bildverbesserung, wobei das Verfahren Folgendes umfasst:

Erhalten eines Trainingsdatensatzes, umfassend eine Vielzahl von Originalbildern;
Erzeugen, für jedes Originalbild in dem Trainingsdatensatz, von mindestens zwei degradierten Bildern, wobei die mindestens zwei degradierten Bilder ein erstes degradiertes Bild (104) und ein zweites degradiertes Bild (104a) umfassen, wobei das zweite degradierte Bild (104a) stärker degradiert ist als das erste degradierte Bild (104); und
für jedes Originalbild in dem Trainingsdatensatz, Trainieren des Lehrer-Schüler-Diffusions-ML-Modells unter Verwendung des Originalbilds und der entsprechenden mindestens zwei erzeugten degradierten Bilder durch:

Trainieren, unter Verwendung des ersten degradierten Bilds (104), eines Lehrer-Diffusions-ML-Modells 110 des Lehrer-Schüler-Diffusions-ML-Modells zur Durchführung einer ersten Bildverbesserungsaufgabe und Erzeugung einer verbesserten Version des ersten degradierten Bilds durch Verwendung, als ein Trainingsziel, des Originalbilds;
Übertragen von Wissen darüber, wie die verbesserte Version des ersten degradierten Bilds aus dem Lehrer-Diffusions-ML-Modell (110) zu erzeugen ist, auf ein Schüler-Diffusions-ML-Modell (110a) des Lehrer-Schüler-Diffusions-ML-Modells; und
Trainieren, unter Verwendung des zweiten degradierten Bilds (104a), des Schüler-Diffusions-ML-Modells (110a) des Lehrer-Schüler-Diffusions-ML-Modells zur Durchführung einer zweiten Bildverbesserungsaufgabe und Erzeugung einer verbesserten Version des zweiten degradierten Bilds durch Verwendung des übertragenen Wissens und durch Verwendung der verbesserten Version des ersten degradierten Bilds als ein Trainingsziel.

2. Verfahren nach Anspruch 1, wobei:

das Lehrer-Diffusions-ML-Modell (110) die erste Bildverbesserungsaufgabe über eine Reihe von Zeitschritten durchführt und das Übertragen von Wissen aus dem Lehrer-Diffusions-ML-Modell (110) auf das Schüler-Diffusions-ML-Modell (110a) das Übertragen von Wissen zu jedem Zeitschritt der Reihe von Zeitschritten während des Trainierens des Schüler-Diffusions-ML-Modells (110a) umfasst; und

das Schüler-Diffusions-ML-Modell (110a) die zweite Bildverbesserungsaufgabe über eine entsprechende Reihe von Zeitschritten durchführt und das Trainieren des Schüler-Diffusions-ML-Modells (110a) zur Erzeugung einer verbesserten Version des zweiten degradierten Bilds das Verwenden des übertragenen Wissens zu dem entsprechenden Zeitschritt des Trainierens des Schüler-Diffusions-ML-Modells (110a) umfasst.

3. Verfahren nach Anspruch 1 oder 2, wobei das Erzeugen der mindestens zwei degradierten Bilder Folgendes umfasst:

Erzeugen des ersten degradierten Bilds (104) unter Verwendung einer ersten Modifikationsfunktion; und
Erzeugen des zweiten degradierten Bilds (104a) unter Verwendung einer zweiten Modifikationsfunktion, wobei die zweite Modifikationsfunktion eine größere Modifikation als die erste Modifikationsfunktion anwendet, sodass das zweite degradierte Bild (104a) stärker degradiert ist als das erste degradierte Bild (104).

4. Verfahren nach einem der Ansprüche 1, 2 oder 3, wobei das Trainieren des Lehrer-Schüler-Diffusions-Maschinenlern-, ML-, Modells zur Durchführung einer Bildverbesserung das Trainieren des Lehrer-Schüler-Diffusions-ML-Modells zur Wiederherstellung fehlender oder degradierter Bereiche eines Bilds umfasst.

5. Verfahren nach Anspruch 1, 2 oder 3, wobei das Trainieren des Lehrer-Schüler-Diffusions-Maschinenlern-, ML-, Modells zur Durchführung einer Bildverbesserung das Trainieren des Lehrer-Schüler-Diffusions-ML-Modells zur Durchführung einer Superauflösung zur Erhöhung der Auflösung eines Bilds um einen Faktor N umfasst und wobei das Verfahren ferner Folgendes umfasst:

Bestimmen einer Anzahl von Stufen, die erforderlich sind, um die Auflösung eines Bilds um den Faktor N zu erhöhen; und
wobei das Erzeugen von mindestens zwei degradierten Bildern das Erzeugen einer Anzahl von niedrig aufgelösten Bildern basierend auf der bestimmten Anzahl von Stufen umfasst.

6. Verfahren nach Anspruch 5, wobei, wenn die bestimmte Anzahl von Stufen eins ist, das Erzeugen der mindestens zwei degradierten Bilder das Erzeugen von zwei niedrig aufgelösten Bildern für die eine Stufe umfasst, durch:

Erzeugen des ersten degradierten Bilds (104) unter Verwendung einer ersten Vergrößerungsskala; und
Erzeugen des zweiten degradierten Bilds (104a) unter Verwendung einer zweiten Vergrößerungsskala, wobei die zweite Vergrößerungsskala größer als die erste Vergrößerungsskala ist, sodass das zweite degradierte Bild (104a) stärker degradiert ist als das erste degradierte Bild (104), und die erste und die zweite Vergrößerungsskala die Auflösung des Originalbilds reduzieren.

7. Verfahren nach Anspruch 6, wobei:

das Trainieren des Lehrer-Diffusions-ML-Modells (110) das Trainieren des Lehrer-Diffusions-ML-Modells (110) zur Erhöhung der Auflösung des ersten degradierten Bilds (104), durch Verwendung einer Auflösung des Originalbilds als das Trainingsziel, umfasst; und
das Trainieren des Schüler-Diffusions-ML-Modells (110a) das Trainieren des Schüler-Diffusions-ML-Modells (110a) zur Erhöhung der Auflösung des zweiten degradierten Bilds (104a), durch Verwendung des übertragenen Wissens und einer Auflösung der verbesserten Version des ersten degradierten Bilds als das Trainingsziel, umfasst.

8. Verfahren nach Anspruch 5, wobei, wenn die bestimmte Anzahl von Stufen mehr als eins ist, das Erzeugen der mindestens zwei degradierten Bilder Folgendes umfasst:
für eine erste Stufe:

Erzeugen des ersten degradierten Bilds (104) unter Verwendung einer ersten Vergrößerungsskala; und
Erzeugen des zweiten degradierten Bilds (104a) unter Verwendung einer zweiten Vergrößerungsskala, wobei die zweite Vergrößerungsskala größer als die erste Vergrößerungsskala ist, sodass das zweite degradierte Bild (104a) stärker degradiert ist als das erste degradierte Bild (104), und die erste und die zweite Vergrößerungsskala die Auflösung des Originalbilds reduzieren; und

für jede weitere Stufe:
Erzeugen eines weiteren degradierten Bilds unter Verwendung einer weiteren Vergrößerungsskala, wobei die weitere Vergrößerungsskala größer als jede Vergrößerungsskala der vorherigen Stufe ist, sodass jedes weitere degradierte Bild stärker degradiert ist als ein vorhergehendes degradiertes Bild, und die Vergrößerungsskalen die Auflösung des Originalbilds reduzieren.

9. Verfahren nach Anspruch 8, wobei:
für die erste Stufe:

das Trainieren des Lehrer-Diffusions-ML-Modells (110) das Trainieren des Lehrer-Diffusions-ML-Modells (110) zur Erhöhung der Auflösung des ersten degradierten Bilds (104), durch Verwendung einer Auflösung des Originalbilds als das Trainingsziel, umfasst; und
das Trainieren des Schüler-Diffusions-ML-Modells (110a) das Trainieren des Schüler-Diffusions-ML-Modells (110a) zur Erhöhung der Auflösung des zweiten degradierten Bilds (104a), durch Verwendung des übertragenen Wissens und einer Auflösung der verbesserten Version des ersten degradierten Bilds als das Trainingsziel, umfasst; und
für jede weitere Stufe:

Einstellen des Schüler-Diffusions-ML-Modells (110a) einer unmittelbar vorhergehenden Stufe als das Lehrer-Diffusions-ML-Modell für eine aktuelle Stufe; und
das Trainieren des Schüler-Diffusions-ML-Modells (110a) der aktuellen Stufe das Trainieren des Schüler-Diffusions-ML-Modells (110a) zur Erhöhung der Auflösung eines weiteren degradierten Bilds für die aktuelle Stufe, durch Verwendung von übertragenem Wissen aus dem Lehrer-Diffusions-ML-Modell für die aktuelle Stufe und einer Auflösung der verbesserten Version des ersten degradierten Bilds als das Trainingsziel, umfasst.

10. Verfahren nach einem vorhergehenden Anspruch, wobei das Trainieren des Lehrer- und des Schüler-Diffusions-ML-Modells das Trainieren von latenten Diffusionsmodellen umfassend einen Codierer, einen Decodierer und ein U-Netz umfasst.

11. Verfahren nach Anspruch 10, wobei das Trainieren des Schüler-Diffusions-ML-Modells (110a) ferner das Initialisieren des Codierers (108a), Decodierers und U-Netzes des Schüler-Diffusions-ML-Modells (110a) mit Gewichten des Lehrer-Diffusions-ML-Modells (110) umfasst.

12. Verfahren nach Anspruch 10 oder 11, wobei das Trainieren des Schüler-Diffusions-ML-Modells (110a) ferner das Trainieren des U-Netzes des Schüler-Diffusions-ML-Modells (110a) umfasst, während Gewichte des Codierers (108a) und Decodierers des Schüler-Diffusions-ML-Modells (110a) eingefroren werden.

13. Computerimplementiertes Verfahren zur Verwendung eines trainierten Maschinenlern-, ML-, Modells zur Durchführung einer Bildverbesserung, wobei das Verfahren Folgendes umfasst:

Empfangen eines ersten Bilds, das zu verbessern ist;
Eingeben des ersten Bilds in ein Schüler-Diffusions-ML-Modell (110a), das gemäß dem Verfahren nach einem der Ansprüche 1 bis 12 trainiert worden ist; und
Erhalten eines verbesserten zweiten Bilds aus dem trainierten Schüler-Diffusions-ML-Modell (110a).

14. Verfahren nach Anspruch 13, wobei das Durchführen einer Bildverbesserung das Durchführen einer Superauflösung umfasst und wobei:

das Empfangen des ersten Bilds das Empfangen eines niedrig aufgelösten Bilds umfasst; und
das Erhalten eines verbesserten zweiten Bilds das Erhalten einer Superauflösungsversion des niedrig aufgelösten Bilds umfasst.

15. Verfahren nach Anspruch 13, wobei die Bildverbesserung eine Wiederherstellung fehlender oder degradierter Bereiche des ersten Bilds ist.

**Revendications**

1. Procédé mis en œuvre par ordinateur permettant d'entraîner un modèle d'apprentissage automatique, ML, par diffusion enseignant-élève à réaliser une amélioration d'image, le procédé comprenant :

l'obtention d'un ensemble de données d'entraînement comprenant une pluralité d'images originales ;
la génération, pour chaque image originale dans l'ensemble de données d'entraînement, d'au moins deux images dégradées, les au moins deux images dégradées comprenant une première image dégradée (104) et une seconde image dégradée (104a), où la seconde image dégradée (104a) est davantage dégradée que la première image dégradée (104) ; et
pour chaque image originale dans l'ensemble de données d'entraînement, l'entraînement du modèle ML de diffusion enseignant-élève à l'aide de l'image originale et des au moins deux images dégradées générées correspondantes par :

l'entraînement, à l'aide de la première image dégradée (104), d'un modèle ML de diffusion enseignant 110 du modèle ML de diffusion enseignant-élève pour réaliser une première tâche d'amélioration d'image et générer une version améliorée de la première image dégradée, à l'aide de l'image originale en tant que cible d'entraînement ;
le transfert de connaissances sur la façon de générer la version améliorée de la première image dégradée du modèle ML de diffusion enseignant (110) à un modèle ML de diffusion élève (110a) du modèle ML de diffusion enseignant-élève ; et
l'entraînement, à l'aide de la seconde image dégradée (104a), du modèle ML de diffusion élève (110a) du modèle ML de diffusion enseignant-élève pour réaliser une seconde tâche d'amélioration d'image et générer une version améliorée de la seconde image dégradée, à l'aide des connaissances transférées et à l'aide de la version améliorée de la première image dégradée en tant que cible d'entraînement.

2. Procédé selon la revendication 1,

ledit modèle ML de diffusion enseignant (110) réalisant la première tâche d'amélioration d'image sur une série d'étapes temporelles, et ledit transfert de connaissances du modèle ML de diffusion enseignant (110) au modèle ML de diffusion élève (110a) comprenant le transfert de connaissances à chaque étape temporelle de la série d'étapes temporelles durant l'entraînement du modèle ML de diffusion élève (110a) ; et
ledit modèle ML de diffusion élève (110a) réalisant la seconde tâche d'amélioration d'image sur une série correspondante d'étapes temporelles, et ledit entraînement du modèle ML de diffusion élève (110a) pour générer une version améliorée de la seconde image dégradée comprenant l'utilisation de connaissances transférées à l'étape temporelle correspondante de l'entraînement du modèle ML de diffusion élève (110a).

3. Procédé selon la revendication 1 ou 2, ladite génération des au moins deux images dégradées comprenant :

la génération de la première image dégradée (104) à l'aide d'une première fonction de modification ; et
la génération de la seconde image dégradée (104a) à l'aide d'une seconde fonction de modification,
ladite seconde fonction de modification appliquant une modification plus importante que la première fonction de modification de sorte que la seconde image dégradée (104a) soit davantage dégradée que la première image dégradée (104).

4. Procédé selon l'une quelconque des revendications 1, 2 ou 3, ledit entraînement du modèle d'apprentissage automatique, ML, par diffusion enseignant-élève à réaliser une amélioration d'image comprenant l'entraînement du modèle ML de diffusion enseignant-élève à restaurer des zones manquantes ou dégradées d'une image.

5. Procédé selon la revendication 1, 2 ou 3, ledit entraînement du modèle d'apprentissage automatique, ML, de diffusion enseignant-élève à réaliser une amélioration d'image comprenant l'entraînement du modèle ML, de diffusion enseignant-élève à réaliser une super-résolution pour augmenter la résolution d'une image d'un facteur N, et ledit procédé comprenant en outre :

la détermination d'un nombre de phases nécessaires pour augmenter la résolution d'une image par le facteur N ; et
la génération d'au moins deux images dégradées comprenant la génération d'un nombre d'images à basse résolution sur la base du nombre déterminé de phases.

**6.** Procédé selon la revendication 5, lorsque le nombre déterminé de phase est un, la génération des au moins deux images dégradées comprenant la génération de deux images basse résolution pour la seule phase, par :

la génération de la première image dégradée (104) à l'aide d'une première échelle de grossissement ; et
la génération de la seconde image dégradée (104a) à l'aide d'une seconde échelle de grossissement, ladite seconde échelle de grossissement étant plus grande que la première échelle de grossissement de sorte que la seconde image dégradée (104a) soit davantage dégradée que la première image dégradée (104), et lesdites première et seconde échelles de grossissement réduisant la résolution de l'image originale.

**7.** Procédé selon la revendication 6 :

ledit entraînement du modèle ML de diffusion enseignant (110) comprenant l'entraînement du modèle ML de diffusion enseignant (110) pour augmenter la résolution de la première image dégradée (104), à l'aide d'une résolution de l'image originale en tant que cible d'entraînement ; et
ledit entraînement du modèle ML de diffusion élève (110a) comprenant l'entraînement du modèle ML de diffusion élève (110a) pour augmenter la résolution de la seconde image dégradée (104a), à l'aide de connaissances transférées et d'une résolution de la version améliorée de la première image dégradée en tant que cible d'entraînement.

**8.** Procédé selon la revendication 5, lorsque le nombre déterminé de phases est supérieur à un, la génération des au moins deux images dégradées comprenant :
pour une première phase :

la génération de la première image dégradée (104) à l'aide d'une première échelle de grossissement ;
la génération de la seconde image dégradée (104a) à l'aide d'une seconde échelle de grossissement, ladite seconde échelle de grossissement étant plus grande que la première échelle de grossissement de sorte que la seconde image dégradée (104a) soit davantage dégradée que la première image dégradée (104), et lesdites première et seconde échelles de grossissement réduisant la résolution de l'image originale ; et
pour chaque phase supplémentaire :
la génération d'une image dégradée supplémentaire à l'aide d'une échelle de grossissement supplémentaire, ladite échelle de grossissement supplémentaire étant plus grande que chaque échelle de grossissement de la phase précédente de sorte que chaque image dégradée supplémentaire soit davantage dégradée qu'une image dégradée précédente, et lesdites échelles de grossissement réduisant la résolution de l'image originale.

**9.** Procédé selon la revendication 8 :
pour la première phase :

ledit entraînement du modèle ML de diffusion enseignant (110) comprenant l'entraînement du modèle ML de diffusion enseignant (110) pour augmenter la résolution de la première image dégradée (104), à l'aide d'une résolution de l'image originale en tant que cible d'entraînement ; et
ledit entraînement du modèle ML de diffusion élève (110a) comprenant l'entraînement du modèle ML de diffusion élève (110a) pour augmenter la résolution de la seconde image dégradée (104a), à l'aide des connaissances transférées et d'une résolution de la version améliorée de la première image dégradée en tant que cible d'entraînement ; et
pour chaque phase supplémentaire :

la définition du modèle ML de diffusion élève (110a) d'une phase immédiatement précédente en tant que modèle ML de diffusion enseignant pour une phase en cours ; et
ledit entraînement du modèle ML de diffusion élève (110a) de la phase en cours comprenant l'entraînement du modèle ML de diffusion élève (110a) pour augmenter la résolution d'une image dégradée supplémentaire pour la phase en cours, à l'aide de connaissances transférées du modèle ML de diffusion enseignant pour la phase en cours et d'une résolution de la version améliorée de la première image dégradée en tant que cible d'entraînement.

**10.** Procédé selon une quelconque revendication précédente, ledit entraînement des modèles ML de diffusion enseignant et élève comprenant l'entraînement de modèles de diffusion latente comprenant un codeur, un décodeur et U-Net.

**11.** Procédé selon la revendication 10, ledit entraînement du modèle ML de diffusion élève (110a) comprenant en outre l'initialisation du codeur (108a), du décodeur et de U-Net du modèle ML de diffusion élève (110a) avec des poids du modèle ML de diffusion enseignant (110).

**12.** Procédé selon la revendication 10 ou 11, ledit entraînement du modèle ML de diffusion élève (110a) comprenant en outre l'entraînement du U-net du modèle ML de diffusion élève (110a) tout en gelant les poids du codeur (108a) et du décodeur du modèle ML de diffusion élève (110a).

**13.** Procédé mis en œuvre par ordinateur permettant d'utiliser un modèle d'apprentissage automatique, ML, entraîné pour réaliser une amélioration d'image, le procédé comprenant :

la réception d'une première image qui doit être améliorée ;
l'entrée de la première image dans un modèle ML de diffusion élève (110a) qui a été entraîné selon le procédé de l'une quelconque des revendications 1 à 12 ; et
l'obtention d'une seconde image améliorée à partir du modèle ML de diffusion élève entraîné (110a).

**14.** Procédé selon la revendication 13, ladite réalisation d'une amélioration d'image comprenant la réalisation d'une super-résolution, et :

ladite réception de la première image comprenant la réception d'une image basse résolution ; et
ladite obtention d'une seconde image améliorée comprenant l'obtention d'une version super-résolution de l'image basse résolution.

**15.** Procédé selon la revendication 13, ladite amélioration d'image étant une restauration des zones manquantes ou dégradées de la première image.

Training of teacher-student ML model

```
┌─────────────────────────────────────────────┐
│                                               │
│         Obtain training dataset S100          │
│                                               │
└───────────────────────┬───────────────────────┘
                        │
                        ▼
┌─────────────────────────────────────────────┐
│                                               │
│        Generate modified images S102          │
│                                               │
└───────────────────────┬───────────────────────┘
                        │
                        ▼
┌─────────────────────────────────────────────┐
│      Train teacher diffusion ML model for     │
│     first image enhancement task S104         │
└───────────────────────┬───────────────────────┘
                        │
                        ▼
┌─────────────────────────────────────────────┐
│      Transfer knowledge from teacher to       │
│     student diffusion ML model S106           │
└───────────────────────┬───────────────────────┘
                        │
                        ▼
┌─────────────────────────────────────────────┐
│      Train student diffusion ML model for     │
│    second image enhancement task S108         │
└───────────────────────────────────────────────┘
```

FIGURE 1A

FIGURE 1B

(A)

×4

(B)

×8

FIGURE 2

**Algorithm 1** Scale Distillation Training. Given a set of scale factors, *e.g.* $\{2, 4, 8\}$, we start by training a student for the first scale using the raw data(line 23) initialized with the text-to-image weights(line 4). We then use the trained student as a teacher to train the next distillation iteration for a higher magnification(line 20). DEGRADE function degrades a given HR image with the given scale factor. RESIZELIKE function resizes a given LR image to the same size as the given HR image using the bicubic method.

Input: dataset $\mathcal{D}$
Input: noise schedule $\alpha_t, \tau_t, \lambda_t$      $\triangleright$ for $t \in [0, 1]$
Input: scale factors $S$      $\triangleright$ e.g. $\{2,4,8\}$
Input: initialization $\theta, \phi$      $\triangleright$ from text-to-image
**for** $i \in [0, \ldots, |S|]$ **do**
     $s \leftarrow S[i]$
     **while** not converged **do**      $\triangleright$ student training
         $t \sim \mathcal{U}[0, 1]$
         $\epsilon \sim \mathcal{N}(0, I)$
         $\mathbf{x}_h \sim \mathcal{D}$
         $\mathbf{x}_l \leftarrow \text{DEGRADE}(\mathbf{x}_h, s)$
         $\mathbf{z}_h \leftarrow \mathcal{E}(\mathbf{x}_h)$
         $\mathbf{z}_l \leftarrow \mathcal{E}(\text{RESIZELIKE}(\mathbf{x}_l, \mathbf{x}_h))$
         $\mathbf{z}_t \leftarrow \alpha_t \mathbf{z}_h + \sigma_t \epsilon$
         **if** $i > 0$ **then**
             $\triangleright$ Obtain the target from the previous scale
             $s' \leftarrow S[i - 1]$
             $\mathbf{x}'_l \leftarrow \text{DEGRADE}(\mathbf{x}_h, s')$
             $\mathbf{z}'_l \leftarrow \mathcal{E}(\text{RESIZELIKE}(\mathbf{x}'_l, \mathbf{x}_h))$
             $\tilde{\mathbf{z}} \leftarrow \hat{\mathbf{z}}_\phi(\mathbf{z}_t, \mathbf{z}'_l, \lambda_t)$
         **else**
             $\triangleright$ Raw data as a target for the first teacher
             $\tilde{\mathbf{z}} \leftarrow \mathbf{z}_h$
         **end if**
         $\mathcal{L}_\theta \leftarrow \omega(\lambda_t)\|\hat{\mathbf{z}}_\theta(\mathbf{z}_t, \mathbf{z}_l, \lambda_t) - \tilde{\mathbf{z}}\|_2^2$
         $\theta \leftarrow \theta - \eta \nabla_\theta \mathcal{L}_\theta$
     **end while**
     $\phi \leftarrow \theta$
**end for**

FIGURE 3

| Decoder | | Original | | Fine-tuned | |
|---|---|---|---|---|---|
| Scale distillation | | ✗ | ✓ | ✗ | ✓ |
| ×4 | FID ↓ | 27.93 | **21.63** | 16.77 | **12.25** |
| | LPIPS ↓ | 0.227 | **0.210** | 0.162 | **0.145** |
| | PSNR ↑ | 24.25 | **25.06** | 24.21 | **25.19** |
| | SSIM ↑ | 0.668 | **0.691** | 0.678 | **0.700** |
| ×8 | FID ↓ | 102.92 | **56.84** | 41.54 | **21.48** |
| | LPIPS ↓ | 0.541 | **0.378** | 0.305 | **0.217** |
| | PSNR ↑ | 21.08 | **23.20** | 21.53 | **23.14** |
| | SSIM ↑ | 0.541 | **0.610** | 0.528 | **0.610** |

FIGURE 4

| D-Level | Metric | ESRGAN | BSRGAN | Real-ESRGAN | Real-SwinIR | DASR | YONOS (Ours) |
|---|---|---|---|---|---|---|---|
| Bicubic | PSNR ↑ | 28.17 | 27.32 | 26.65 | 26.83 | 28.55 | 26.71 |
| | LPIPS ↓ | 0.1154 | 0.2364 | 0.2284 | 0.2221 | 0.1696 | 0.1534 |

FIGURE 5

(A)

| Datasets | Metrics | RealSR | BSRGAN | DASR | Real-ESRGAN+ | FeMaSR | LDM | StableSR | YONOS (ours) |
|---|---|---|---|---|---|---|---|---|---|
| DIV2K Valid RealESRGAN degradations | LPIPS ↓ | 0.5276 | 0.3351 | 0.3543 | 0.3112 | 0.3199 | 0.2510 | 0.3114 | 0.2620 |
| | FID ↓ | 49.49 | 44.22 | 49.16 | 37.64 | 35.87 | 26.47 | 24.44 | 26.14 |
| | MUSIQ ↑ | 28.57 | 61.19 | 55.19 | 61.05 | 60.83 | 62.27 | 65.92 | 68.35 |
| | PSNR ↑ | 24.62 | 24.58 | 24.47 | 24.28 | 23.06 | 23.32 | 23.26 | 24.88 |
| | SSIM ↑ | 0.5970 | 0.6269 | 0.6304 | 0.6372 | 0.5887 | 0.5762 | 0.5726 | 0.6381 |
| DIV2K Valid bicubic degradations | LPIPS ↓ | - | 0.2364 | 0.1696 | 0.2284 | - | 0.2323 | 0.2580 | 0.1534 |
| | PSNR ↑ | - | 27.32 | 28.55 | 26.65 | - | 25.49 | 21.90 | 26.71 |
| - | # STEPS ↓ | - | - | - | - | - | 200 | 200 | 1 |

(B)

| Datasets | Metrics | RealSR | BSRGAN | DASR | Real-ESRGAN+ | FeMaSR | LDM | StableSR | YONOS (ours) |
|---|---|---|---|---|---|---|---|---|---|
| RealSR | LPIPS ↓ | 0.3570 | 0.2656 | 0.3134 | 0.2709 | 0.2937 | 0.3159 | 0.3002 | 0.2511 |
| | MUSIQ ↑ | 38.26 | 63.28 | 41.21 | 60.36 | 59.06 | 58.90 | 65.88 | 69.20 |
| DRealSR | LPIPS ↓ | 0.3938 | 0.2858 | 0.3099 | 0.2818 | 0.3157 | 0.3379 | 0.3284 | 0.3156 |
| | MUSIQ ↑ | 26.93 | 57.16 | 42.41 | 54.26 | 53.71 | 53.72 | 58.51 | 65.02 |
| DPED-iphone | MUSIQ ↑ | 45.60 | 45.89 | 32.68 | 42.42 | 49.95 | 44.23 | 50.48 | 58.76 |
| - | # STEPS ↓ | - | - | - | - | - | 200 | 200 | 1 |

(C)

| | Imagenet | | | FFHQ | | |
|---|---|---|---|---|---|---|
| | FID ↓ | LPIPS ↓ | PSNR ↑ | FID ↓ | LPIPS ↓ | PSNR ↑ |
| LDPS | 61.09 | 0.475 | 23.21 | 36.81 | 0.292 | 28.78 |
| GML-DPS [23] | 60.36 | 0.456 | 23.21 | 41.65 | 0.318 | 28.50 |
| PSLD [23] | 60.81 | 0.471 | 23.17 | 36.93 | 0.335 | 26.62 |
| LDIR [8] | 63.46 | 0.480 | 22.23 | 36.04 | 0.345 | 25.79 |
| P2L [3] | 51.81 | 0.386 | 23.38 | 31.23 | 0.290 | 28.55 |
| YONOS (ours) | 34.59 | 0.241 | 22.80 | 21.41 | 0.161 | 26.08 |

FIGURE 6

Server 902

Processor(s) 904

Image database 908

Memory 906

Teacher model 910

Student model 912

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIM SALIMANS et al.** Progressive Distillation for Fast Sampling of Diffusion Models. *ARXIV.ORG*, 07 June 2022
- **RAFAEL-EDY MENADIL et al.** Learning Using Generated Privileged Information by Text-to-Image Diffusion Models. *ARXIV.ORG*, 26 September 2023
- On Distillation of Guided Diffusion Models. **MENG CHENLIN et al.** 2023 IEEE/CVF CONFERENCE ON COMPUTER VISION AND PATTERN RECOGNITION (CVPR). IEEE, 17 June 2023, 14297-14306
- **CHITWAN SAHARIA et al.** Image Super-Resolution via Iterative Refinement. *ARXIV.ORG*
- **TIM SALIMANS** ; **JONATHAN HO**. Progressive distillation for fast sampling of diffusion models. *International Conference on Learning Representations*, 2022
- **JIAMING SONG** ; **CHENLIN MENG** ; **STEFANO ERMON.** Denoising diffusion implicit models. *International Conference on Learning Representations*, 2021
- **ROMBACH et al.** High-resolution image synthesis with latent diffusion models. *IEEE Conference on Computer Vision and Pattern Recognition*, 2022
- **KARRAS et al.** A style-based generator architecture for generative adversarial networks. *IEEE Conference on Computer Vision and Pattern Recognition*, 2019
- **XINTAO WANG** ; **LIANGBIN XIE** ; **CHAO DONG** ; **YING SHAN**. Real-ESRGAN: Training real-world blind super-resolution with pure synthetic data. *IEEE International Conference on Computer Vision - Workshops*, 2021
- **WANG et al.** Exploiting diffusion prior for real-world image super-resolution. *arXiv preprint arXiv:2305.07015*, 2023
- **XIAOZHONG JI** ; **YUN CAO** ; **YING TAI** ; **CHENGJIE WANG** ; **JILIN LI** ; **FEIYUE HUANG.** Real-world super-resolution via kernel estimation and noise injection.. *IEEE Conference on Computer Vision and Pattern Recognition - Workshops*, 2020
- **PENGXU WEI** ; **ZIWEI XIE** ; **HANNAN LU** ; **ZONGYUAN ZHAN** ; **QIXIANG YE** ; **WANGMENG ZUO** ; **LIANG LIN.** Component divide-and-conquer for real-world image super-resolution.. *In European Conference on Computer Vision*, 2020
- **ANDREY IGNATOV** ; **NIKOLAY KOBYSHEV** ; **RADU TIMOFTE** ; **KENNETH VANHOEY** ; **LUC VAN GOOL.** Dslr-quality photos on mobile devices with deep convolutional networks.. *In IEEE International Conference on Computer Vision*, 2017
- **ZHANG et al.** The unreasonable effectiveness of deep features as a perceptual metric. *In IEEE Conference on Computer Vision and Pattern Recognition*, 2018
- **HEUSEL et al.** Gans trained by a two time-scale update rule converge to a local nash equilibrium. *In Advances on Neural Information Processing Systems*, 2017
- **KE et al.** Musiq: Multiscale image quality transformer. *IEEE International Conference on Computer Vision*, 2021
- **WANG et al.** *arXiv preprint arXiv:2305.07015*, 2023
- **ZHANG et al.** Designing a practical degradation model for deep blind image super-resolution. *In IEEE International Conference on Computer Vision*, 2021
- **WANG et al.** Real-ESRGAN: Training real-world blind super-resolution with pure synthetic data. *IEEE International Conference on Computer Vision - Workshops*, 2021
- **LIANG et al.** Efficient and degradation-adaptive network for real-world image super-resolution. *European Conference on Computer Vision*, 2022
- **CHEN et al.** Real-world blind super-resolution via feature matching with implicit high-resolution priors. *ACM International Conference on Multimedia*, 2022
- **CHUNG et al.** Prompt-tuning latent diffusion models for inverse problems. *arXiv preprint arXiv: 2310.01110*, 2023
- **CHUNG et al.** Prompt-tuning latent diffusion models for inverse problems. *arXiv: 2310.01110*, 2023
- **EIRIKUR AGUSTSSON** ; **RADU TIMOFTE**. Ntire 2017 challenge on single image super-resolution: Dataset and study. *IEEE Conference on Computer Vision and Pattern Recognition - Workshops*, 2017